# EUROPÄISCHE PATENTSCHRIFT

(11) **EP 4 653 348 B1**
(45) Veröffentlichungstag und Bekanntmachung des Hinweises auf die Patenterteilung: **19.08.2026**
(21) Anmeldenummer: 24196544.1
(22) Anmeldetag: 26.08.2024
(51) Int. Cl.: B65G 43/02, B65G 47/96

(54) **FÖRDERVORRICHTUNG, VERFAHREN ZUM BETREIBEN UND VERWENDUNG**
CONVEYOR DEVICE, METHOD FOR OPERATING AND USE
DISPOSITIF DE TRANSPORT, PROCÉDÉ DE FONCTIONNEMENT ET UTILISATION

(30) Priorität: 22.05.2024 DE 102024114335
(43) Veröffentlichungstag der Anmeldung: 26.11.2025
(73) Patentinhaber: Deutsche Post AG, 53113 Bonn (DE)
(72) Erfinder: Kuznecov, Viktor, 53721 Siegburg (DE); Fisser, Frank, 53733 Köln (DE)
(74) Vertreter: Michalski Hüttermann & Partner mbB

(56) Entgegenhaltungen:
- KR-B1- 101 793 932
- US-A1- 2021 206 578
- US-B1- 6 349 653

## Beschreibung

Die Erfindung betrifft eine Fördervorrichtung zum Fördern von Objekten. Die Erfindung betrifft ferner ein Verfahren zum Betreiben einer Fördervorrichtung zum Fördern von Objekten und eine Verwendung.

Es ist bekannt, dass geförderte Objekte sich in einer Fördervorrichtung verklemmen oder abhandenkommen können. Das gefährdet einerseits die Fördervorrichtung an sich bzw. deren ordnungsgemäßen Betrieb. Andererseits wird die ordnungsgemäße Beförderung der Objekte gefährdet.

Des Weiteren müssen Fördervorrichtungen regelmäßig gewartet und gegebenenfalls repariert werden. Hierzu muss eine Fördervorrichtung regelmäßig abgeschaltet werden, es müssen aufwendige händische Tätigkeiten vollzogen werden und es muss auf ordnungsgemäßen Arbeitsschutz geachtet werden.

US 6 349 653 B1, welche die Merkmale des Oberbegriffs des Anspruchs 1 offenbart, beschreibt Materialhandhabungssysteme und die Inspektion und Wartung solcher Systeme, insbesondere solcher, die für die Sortierung von Artikeln geeignet sind, wie z. B. Posthandhabungssysteme.

KR 101 793 932 B1 beschreibt ein Verfahren zur Beförderung und Behandlung von Gütern.

Davon ausgehend ist es die Aufgabe der Erfindung, Lösungen bereitzustellen, mit denen das Fördern bzw. die Beförderung von Objekten bei Fördervorrichtungen besser gelingt. Insbesondere soll eine Wartung und Reparatur bei Fördervorrichtungen verbessert werden. Insbesondere sollen Nachteile bei aus dem Stand der Technik bekannten Lösungen vermieden oder aber zumindest im Wesentlichen reduziert werden.

Diese Aufgabe wird durch den Gegenstand der unabhängigen Patentansprüche gelöst. Insbesondere wird die Erfindung in den unabhängigen Patentansprüchen definiert. Bevorzugte Weiterbildungen der Erfindung finden sich in den Unteransprüchen, in den Figuren und in der nachfolgenden Beschreibung.

Mit der Erfindung können im Zusammenhang mit Fördervorrichtungen Ausfallzeiten verringert werden. Der Arbeitsschutz bei Wartung und Reparatur und die Langlebigkeit der Fördervorrichtungen können ebenfalls verbessert werden. Möglicherweise trägt die Erfindung dazu bei, dass die Fördervorrichtung mit höherer Geschwindigkeit bzw. Fördergeschwindigkeit betrieben werden kann, weil rascher auf Probleme reagiert werden kann. Die Ausgestaltungen der Erfindung können die genannten Vorteile weiter verbessern.

Vorgeschlagen wird insbesondere eine Fördervorrichtung zum Fördern von Objekten, aufweisend eine umlaufende Förderstrecke mit einer oder mehreren beweglichen Fördereinrichtungen zur Auflage der Objekte. Längs der Förderstrecke kann die Fördereinrichtung beweglich geführt sein. Längs der Förderstrecke können eine Vielzahl von Fördereinrichtungen und eine Wartungseinrichtung zum Erfassen der Förderstrecke aneinandergereiht beweglich geführt sein. Insbesondere weist die Fördervorrichtung eine/die Wartungseinrichtung zum Erfassen der Förderstrecke, oder mehrere davon, auf. Insbesondere sind die Fördereinrichtungen jeweils zum Abladen von einem darauf aufliegenden bzw. geförderten Objekt quer zur Förderstrecke ausgebildet. Insbesondere weist die Fördervorrichtung eine fest an der Förderstrecke verbaute Detektionseinrichtung zum Erfassen der Fördereinrichtung und/oder einem Objekt auf. Die Wartungseinrichtung weist insbesondere eine Sensorik zum Erfassen der Förderstrecke zum Erhalten von Informationen zu einer Oberseite und/oder einer Unterseite der Förderstrecke auf. Die Wartungseinrichtung weist insbesondere eine Aktoreinrichtung zum Durchführen von Wartungsarbeiten an der Förderstrecke auf.

Beispielsweise wird mit dem auf die Fördervorrichtung gerichteten unabhängigen Patentanspruch ein Querbandförderer bzw. Querbandsorter bzw. Kippenschalensorter mit einer Vielzahl von Förderzellen vorgeschlagen, wobei eine der Förderzellen durch eine Wartungszelle bzw. Wartungseinheit ersetzt ist, die Sensoren zum Inspizieren der Förderstrecke bzw. Sorterstrecke aufweist. Mit der Wartungszelle kann so vereinfacht auch an schwer zugänglichen Stellen in dem Förderer bzw. Sorter Einsicht genommen werden.

Vorgeschlagen wird insbesondere ein Verfahren zum Betreiben einer/der Fördervorrichtung, das Verfahren umfassend: Bewegen der Wartungseinrichtung(en) und vorzugsweise der Fördereinrichtung(en) längs der Förderstrecke, und Erfassen der Förderstrecke mittels der Wartungseinrichtung zum Erhalten von den Informationen, und insbesondere Vergleichen der erhaltenen Informationen mit vorbekannten Informationen über die Förderstrecke zum Prüfen der Funktion und/oder Ausrichtung der Detektionseinrichtung und/oder zum Lokalisieren einer geometrischen Abweichung in der Förderstrecke.

Beispielsweise wird mit dem auf das Verfahren gerichteten unabhängigen Patentanspruch ein Betriebsverfahren eines Querbandsorters bzw. Querbandförderers mit einer Vielzahl von Förderzellen vorgeschlagen, wobei eine der Förderzellen durch eine Wartungszelle bzw. Wartungseinheit ersetzt ist, die Sensoren zum Inspizieren der Förderstrecke bzw. Sorterstrecke aufweist. Bei dem Verfahren werden Förderzellen und Wartungszelle gemeinsam bewegt bzw. mit gleicher Geschwindigkeit, einschließlich Stillstand, während die Wartungszelle die Förderstrecke bzw. Sorterstrecke inspiziert bzw. sensorisch erfasst. So können insbesondere im Normalbetrieb des Querbandsorters hilfreiche Informationen zum Zustand erhalten werden, womit die Wartung verbessert werden kann.

Vorgeschlagen wird insbesondere eine Verwendung einer, beispielsweise fernsteuerbaren, Wartungseinrichtung
mit einer Sensorik zum Erfassen einer Förderstrecke einer zum Fördern von Objekten ausgebildeten Fördervorrichtung zum Erhalten von Informationen zu einer Oberseite und vorzugsweise einer Unterseite der Förderstrecke und/oder zu weiteren Seitenflächen bzw. Seitenstrukturen der Förderstrecke, und/oder
mit einer Sensorik zum Erfassen einer Förderstrecke einer zum Fördern von Objekten ausgebildeten Fördervorrichtung zum Lokalisieren einer geometrischen Abweichung in der Förderstrecke, und/oder
mit einer Sensorik zum Erfassen einer Förderstrecke einer zum Fördern von Objekten ausgebildeten Fördervorrichtung zum Prüfen der Funktion und/oder Ausrichtung einer fest an der Förderstrecke verbauten Detektionseinrichtung, die zum Erfassen der Fördereinrichtung und/oder einem Objekt ausgebildet ist, und/oder
mit einer Aktoreinrichtung zum Durchführen von Wartungsarbeiten einer Förderstrecke einer zum Fördern von Objekten ausgebildeten Fördervorrichtung.

Die Verwendung sieht insbesondere einen die Förderstrecke und die Wartungseinrichtung mit gleicher Geschwindigkeit bewegenden Betrieb der Fördervorrichtung vor. Die Fördervorrichtung kann insbesondere aneinandergereihte Fördereinrichtungen aufweisen, die jeweils zum Abladen von einem darauf aufliegenden Objekt quer zur Förderstrecke ausgebildet sein können.

Beispielsweise wird mit dem auf die Verwendung gerichteten unabhängigen Patentanspruch die Anwendung einer Wartungszelle bei einem Querbandsorter bzw. Kippschalensorter vorgeschlagen, der eine Förderzelle ersetzt, wobei die Wartungszelle Sensoren zum Inspizieren der Förderstrecke des Querbandsorters aufweist. Die Wartungszelle und die Förderzellen werden gemeinsam bzw. mit gleicher Geschwindigkeit, einschließlich Stillstand, bewegt oder betrieben.

Die Fördervorrichtung bezeichnet typischerweise eine Anlage, die vorgesehen ist, Objekte von einem Ort zu einem anderen zu transportieren und/oder zwischen Orten zu verteilen. Regelmäßig ist die Fördervorrichtung automatisiert, was insbesondere eine Steuerung über Computersysteme einschließt. Die Fördervorrichtung kann beispielsweise Bänder, Walzen, Schienen, Antriebe und/oder andere technische Mittel umfassen, um die Objekte zu Fördern. Beispielsweise kann die Fördervorrichtung ein bewegtes Förderband aufweisen, insbesondere wobei das Förderband als Fördereinrichtung zu verstehen ist.

Die Fördervorrichtung ist insbesondere in einer Produktionsanlage, Postverteilzentrum, Briefverteilzentrum und/oder anderen logistischen und/oder produzierenden Einrichtungen angeordnet bzw. vorgesehen. Insbesondere kann die Fördervorrichtung in einer Lager- oder Produktionshalle vorgesehen sein, beispielsweise zum Fördern von Objekten als Lagerware und/oder Produktionsware.

"Objekte" können Sendungen oder beliebige Transportgüter oder Gegenstände sein, die auf einer Förderstrecke bewegt werden können. Beispielsweise kann es sich bei den Objekten um Gepäckstücke, Koffer, Dosen, Flaschen, Waren, Handelsware, einen Materialstrom, schüttbares Gut oder dergleichen handeln.

Objekte, insbesondere als Sendungen, können formstabil und/oder nicht formstabil sein und/oder Packstücke, Pakete, Briefe, Briefpost, palettierte Güter und dergleichen umfassen. Nicht formstabile Objekte sind beispielsweise Tüten, insbesondere aus Kunststoff und/oder zellulosebasiertem Material. Das Objekt bezieht sich regelmäßig auf verpackte oder unverpackte Gegenstände und/oder Dokumente. Das Objekt ist insbesondere für einen Transport bzw. ein Verteilen mittels der Fördervorrichtung vorgesehen. Objekte können verschieden groß und schwer bzw. anders beschaffen sein. Das Objekt kann umfassen: Couvert, Dokumentenumschlag, Briefumschlag, Polsterumschlag, Verpackungsmaterial, Karton, und/oder Palette. Typischerweise wiegt das Objekt wenigstens ein Gramm. Das Objekt kann mehrere Kilogramm, beispielsweise 10, 20, 30, 50 oder mehr Kilogramm, wiegen. Das Objekt kann in einer Richtung zwischen einem oder mehreren Millimetern bis zu einem oder mehreren Zentimetern, Dezimetern oder Metern an Größe aufweisen. Die Verpackung des Objekts kann darauf ausgerichtet sein, den Inhalt des Objekts vor Schäden während des Transports bzw. des Verteilens zu schützen. Das Objekt bzw. dessen Verpackung kann gepolstert und/oder mechanisch verstärkt sein. Das Objekt kann mit Klebeband oder Verpackungsband umwickelt sein. Es wurde erkannt, dass sich schlecht bzw. ungünstig verpackte Objekte, beispielsweise mit vorstehendem Verpackungsmaterial, Klebeband oder anderen Vorsprüngen, oder auch schmale Objekte, in der Fördervorrichtung verklemmen können. Hier kann die Erfindung mit der Wartungsvorrichtung abhelfen.

Es ist möglich, dass das Objekt mit einem Ortungssystem ausgestattet ist, um ihre Bewegung während des Förderns, insbesondere in der Fördervorrichtung, zu überwachen und/oder zu steuern. Oftmals gibt es jedoch kein Ortungssystem, weshalb die vorliegende Erfindung mit der Wartungsvorrichtung Abhilfe schaffen will. Insoweit vermag die Wartungsvorrichtung ein Ortungssystem aufweisen.

Die umlaufende Förderstrecke bezieht sich insbesondere auf einen Teil der Fördervorrichtung, der die Objekte in einem kontinuierlichen Kreislauf und/oder längs einer definierten Strecke bewegen kann. Diese Förderstrecke kann ein Förderband bzw. Band, eine Kette und/oder eine Schienenkonfiguration aufweisen, die es optional ermöglicht, dass die Objekte wieder zum Ausgangspunkt zurückkehren. Beispielsweise kann die Förderstrecke ausgestaltet sein mit Blick auf eine Einstellbarkeit einer Geschwindigkeit bzw. Fördergeschwindigkeit und/oder eine Integration von Sortier- und Verarbeitungsstationen entlang der Förderstrecke. Es ist möglich, dass Stationen, z.B. automatisierte Beladestationen und/oder Entladestationen, integriert bzw. verknüpft werden, um Funktionalität zu erhöhen. Die Förderstrecke weist regelmäßig eine/die Oberseite und eine/die Unterseite auf. Die Oberseite und die Unterseite sind insbesondere voneinander abgewandte Seiten, beispielsweise wobei die Fördereinrichtung Oberseite und Unterseite voneinander trennt. Die Oberseite kann als erste Seite und die Unterseite als zweite Seite bezeichnet sein. Die Objekte befinden sich typischerweise auf der Oberseite bzw. ersten Seite.

Bei der Fördereinrichtung handelt es sich um ein bewegtes, zu bewegendes und/oder zur Bewegung von Objekten vorgesehenes Teil der Fördervorrichtung. Typischerweise weist die Fördervorrichtung einen oder mehrere Antriebe auf, die die Fördereinrichtung(en) bewegen kann. Mehrere Antriebe können längs der Förderstrecke verteilt angeordnet sein. Die Fördereinrichtung kann in einer Förderrichtung bzw. Haupttransportrichtung bewegt werden und/oder zur Bewegung von Objekten in dieser Richtung ausgebildet sein. Die Förderrichtung kann geradlinig und/oder zumindest abschnittsweise gekrümmt verlaufen. Beispielsweise bildet die Förderrichtung einen umlaufend geschlossenen bzw. zumindest im Wesentlichen endlosen, insbesondere ringförmigen, Kreislauf. Die Förderrichtung kann zwischen Enden verlaufen und/oder verzweigt sein. Es kann auch ein ringförmiger Kreislauf mit Verzweigung vorgesehen sein.

Die Fördereinrichtung kann als Fördermittel der Förderstrecke verstanden werden, insbesondere das in Kontakt mit aufliegenden bzw. anliegenden Objekten stehen soll. Die Förderstrecke kann als Förderband ausgebildet sein bzw. dieses aufweisen. Die Fördereinrichtung kann insoweit ein Förderband mit einer Auflage für ein oder mehrere Objekte und ggf. für die Wartungseinrichtung sein. Die Fördereinrichtung ist insbesondere eingerichtet zum Transport einer oder mehrerer Objekte. Es können mehrere Förderbänder vorgesehen sein. Die Förderstrecke kann als Rollenförderer ausgebildet sein bzw. diesen aufweisen. Die Fördereinrichtung kann insoweit als angetriebene und/oder frei drehende Rolle zum Bewegen von Objekten ausgebildet sein, wobei insbesondere in diesem Fall eine Mehrzahl an Rollen vorgesehen sind.

Es kann eine bzw. die Vielzahl von Fördereinrichtungen vorgesehen sein. Bei der Fördereinrichtung kann es sich um eines von vielen modulartigen Förderelementen der Fördervorrichtung handeln, wobei jedes Förderelement zum Fördern einzelner Objekte vorgesehen sein kann. Die Vielzahl der Fördereinrichtungen bzw. Förderelementen können längs der Förderstrecke bzw. Förderrichtung aneinandergereiht und, insbesondere schwenkbar, aneinandergekoppelt vorgesehen sein. Die Fördereinrichtungen können insoweit eine umlaufende bzw. zusammenhängende Kette bilden. Die Fördereinrichtungen können dann gemeinsam bzw. mit derselben Geschwindigkeit bewegt werden. Die Wartungseinrichtung kann längs der Förderrichtung von vorne und hinten von jeweils einer Fördereinrichtungen umgeben sein und insbesondere an diese, insbesondere in ähnlicher oder gleicher Weise wie Fördereinrichtungen untereinander, gekoppelt sein. Die Fördereinrichtung und/oder die Wartungseinrichtung können/kann schienengeführt sein. Die Förderstrecke weist eine Schiene für die Fördereinrichtungen und die Wartungseinrichtung auf.

Die Wartungseinrichtung bezieht sich beispielsweise auf ein System oder eine Vorrichtung, die dafür vorgesehen ist, den Zustand und die Funktionstüchtigkeit der Förderstrecke zu überwachen bzw. zu diagnostizieren und/oder dabei zu unterstützen. Die Wartungseinrichtung kann Sensoren, Kameras und/oder andere Instrumente enthalten, die Informationen über den Zustand der Förderstrecke erfassen können. Die Wartungseinrichtung kann fernsteuerbar sein, womit insbesondere zumindest eine Übertragung von den Informationen von der Wartungseinrichtung weg auf ein Computergerät, beispielsweise zu einer Fernsteuerung, und optional eine Bedienung der Wartungseinrichtung aus der Ferne gemeint sein kann. Die Wartungseinrichtung kann zur Übertragung der Informationen ausgebildet sein. Die Informationen können insbesondere auf der Wartungseinrichtung selbst und/oder andernorts analysiert werden, beispielsweise um Wartungsarbeiten zu planen und/oder um Probleme zu identifizieren, bevor sie zu Störungen führen. Die Wartungseinrichtung kann Softwaretools umfassen, die zur Visualisierung der Informationen eingerichtet sind und/oder Empfehlungen für Wartungsintervalle und Reparaturen geben können. Die Wartungseinrichtung kann batteriebetrieben sein und/oder längs der Förderstrecke bzw. von der Förderstrecke mit Elektrizität gespeist werden. Die Wartungseinrichtung kann einen Stromgenerator aufweisen, der seine Energie aus der Bewegung der Wartungseinrichtung längs der Förderstrecke bezieht. Beispielsweise kann der Stromgenerator durch die Bewegung der Wartungseinrichtung mechanisch angetrieben sein, damit Elektrizität an der Wartungseinrichtung zur Verfügung steht. Die Wartungseinrichtung kann als unbemanntes Fahrzeug und/oder Objekt verstanden werden, insbesondere das sich längs der Förderstrecke, bevorzugt mit der Fördereinrichtung bzw. den Fördereinrichtungen, insbesondere mit gleicher Geschwindigkeit, bewegen kann. Die Wartungseinrichtung kann einen eigenen Antrieb aufweisen und/oder durch die Förderstrecke angetrieben sein.

Insoweit die Fördereinrichtung zum Abladen von einem darauf aufliegenden bzw. geförderten Objekt quer zur Förderstrecke ausgebildet ist, kann von einem Querbandförderer bzw. Querbandsorter, auch Cross-Belt-Sorter, Kippschalensorter oder Sorter, gesprochen werden. Der Querbandförderer ist ein Fördersystem, das typischerweise dazu konzipiert ist, Objekte primär längs der Förderrichtung als Haupttransportrichtung und beim Abladen quer zur Förderrichtung zu bewegen. Das System ermöglicht es insbesondere, Objekte seitlich zu der Förderrichtung zu verschieben und/oder zu verteilen, sei es um die Objekte zum Stillstand zu bringen, auf eine weitere handhabende Station zu verteilen und/oder zu einer anderen Fördervorrichtung zu bringen. Der Querbandförderer weist typischerweise eine Vielzahl von quer angeordneten Förderbändern oder kippbaren Schlitten auf, die längs der Förderrichtung bewegt werden. Die Förderbänder bzw. Schlitten können zum Abladen der Objekte unabhängig voneinander bewegt werden, um Objekte an bestimmten Stellen und/oder Stationen abzuladen bzw. zu verteilen.

Die Fördervorrichtung kann als Schalensorter ausgebildet sein. Dieser weist eine Vielzahl von Fördereinrichtungen mit einem Mechanismus auf, welcher mit Trägern in Form von Schalen oder Kammern die Objekte fördert und abwirft. Der Schalensorter kann als Kippschalensorter, als Split Tray Sorter oder als Push Tray Sorter ausgebildet sein.

Die Fördervorrichtung, insbesondere der Querbandförderer, kann als Detektionseinrichtung(en) integrierte Scanner oder andere Erkennungssysteme umfassen, die beim Fördern der Objekte, insbesondere der Sortierung und Verteilung der Objekte, mitwirken. Die Detektionseinrichtung bezeichnet insbesondere ein fest installiertes Überwachungs- und/oder Erkennungssystem, das beispielsweise dafür ausgelegt ist, verschiedene Abschnitte und/oder Teile der Förderstrecke und/oder darauf befindliche Objekte zu erfassen. Die Detektionseinrichtung kann eine oder mehrere Komponenten wie Lichtschranken, Kameras, Sensoren, Scannern oder anderen Messgeräten aufweisen, die insbesondere kontinuierlich Daten über den Zustand der Fördereinrichtungen und die Eigenschaften der transportierten Objekte sammeln können. Die Detektionseinrichtung ist typischerweise fest integriert und/oder direkt mit der Förderstrecke verbunden, wodurch eine dauerhafte bzw. jederzeitige Detektion, Überwachung und/oder Datenerfassung ermöglicht wird. Die Detektionseinrichtung kann, beispielsweise, Abmessungen, Gewicht, Typ, Lage und/oder Zustand eines Objekts erkennen. Die Detektionseinrichtung und/oder die Wartungseinrichtung kann/können technische Zustände oder Fehlfunktionen der Förderstrecke identifizieren bzw. lokalisieren. Typischerweise werden die von der Detektionseinrichtung erhaltenen Informationen bei der Verteilung von Objekten verwendet. Wenn eine Detektionseinrichtung nicht funktioniert bzw. falsch ausgerichtet ist, kann dies zu Störungen im Betrieb führen und/oder es kann zum Stillstand der Fördervorrichtung kommen.

Die Sensorik zum Erfassen der Förderstrecke bezieht sich insbesondere auf Sensoren, Sensoranordnungen und/oder Einrichtungen mit Sensoren, die ausgebildet sind, um Informationen über die Ober- und/oder Unterseite der Förderstrecke zu sammeln. Die Sensorik ist insbesondere zum Erfassen der Förderstrecke ausgebildet bzw. speziell dafür eingerichtet.

Die Sensorik kann genutzt werden, um Merkmale wie eine dreidimensionale Erstreckung, einen Verschleißzustand, Beschädigungen/Defekte oder andere strukturelle Eigenschaften der Förderstrecke zu erkennen. Die Sensorik kann wenigstens eine Kamera, einen optischen Sensor, Ultraschallsensor, Radarsensor, Lasersensor, Lidar-Sensor, Infrarotsensor, Schallsensor, Vibrationssensor, Akustiksensor, Schwingungssensor, und/oder taktil wirkenden Sensor umfassen, um die Informationen erhalten zu können. Je nach Anwendungsfall können unterschiedliche Sensoren sinnvoll sein. Die Sensorik kann so konfiguriert sein, dass sie statische und/oder dynamische Eigenschaften misst, wie z.B. Vibrationsmuster der Förderstrecke, die Aufschluss über den laufenden Betriebszustand geben können.

Die Aktoreinrichtung umfasst insbesondere ein bewegliches System oder Hilfsmittel, das Wartungs- und Reparaturarbeiten an der Förderstrecke ausführen kann. Die Aktoreinrichtung kann verschiedene Arten von Aktoren umfassen, insbesondere Roboterarme, Werkzeugträger und/oder oder spezielle Module bzw. Werkzeuge, die für Wartungsarbeiten wie Schmierung, Reinigung, Reparatur, Austausch von Verschleißteilen oder Justierungen eingesetzt werden können. Die Aktoreinrichtung ist beispielsweise mit einem Steuerungssystem ausgestattet, das insbesondere zur Steuerung basierend auf den erhaltenen Informationen und/oder basierend auf Nutzerbefehlen eingerichtet ist. Die Aktoreinrichtung bzw. das Steuerungssystem kann zur Durchführung von Wartungsarbeiten programmiert werden, beispielsweise um den Betrieb der Fördervorrichtung nicht oder möglichst wenig zu stören. Die Wartungseinrichtung, insbesondere mit der Aktoreinrichtung, kann dazu beitragen, die Verfügbarkeit der Fördervorrichtung zu erhöhen, indem sie die Notwendigkeit manueller Eingriffe reduziert und im Grunde selbst durchführt. Gleichzeitig kann die Wartungseinrichtung, insbesondere mit der Aktoreinrichtung, den Arbeitsschutz verbessern, indem sie Menschen von potenziell gefährlichen Wartungsaufgaben fernhält.

Das Vergleichen der erhaltenen Informationen mit vorbekannten Informationen über die Förderstrecke ist insbesondere ein computerimplementierter Verfahrensschritt. Das Vergleichen bezieht sich insbesondere auf einen Soll-Ist-Vergleich. Es kann einerseits die Ist-Umgebung erfasst werden, andererseits die Ist-Umgebung mit einer ursprünglichen bzw. gewünschten Soll-Umgebung verglichen werden. Bei hinreichenden Abweichungen zwischen den Informationen kann beispielsweise auf eine geometrische Abweichung geschlossen werden. Es kann nicht nur das Vorliegen der geometrischen Abweichung, sondern auch deren Ort anhand der erhaltenen Informationen erkannt werden. Das Lokalisieren meint insbesondere das Erkennen und das Verorten der Abweichung. Der Vergleich dient vorteilhaft dazu, die Funktion bzw. Ausrichtung der Detektionseinrichtung zu prüfen. Auch hier zeigen Abweichungen zwischen Ist und Soll entsprechende Hinweise auf, dass die Detektionseinrichtung nicht ordnungsgemäß ausgerichtet ist bzw. nicht funktioniert.

Nachfolgend sind weitere Ausgestaltungsmöglichkeiten der Erfindung angegeben, die vorteilhaft bei der Fördervorrichtung und dem Verfahren angewendet werden können.

Bei der Wartungseinrichtung handelt es sich beispielsweise um eine auf der Förderstrecke mitgeführte Einrichtung. Die Wartungseinrichtung kann auf einer Fördereinrichtung aufstellbar bzw. aufsetzbar ausgebildet sein. Die Wartungseinrichtung kann insbesondere auf einer Auflage einer Fördereinrichtung festgelegt werden. Die Wartungseinrichtung kann auch an eine bzw. mehrere Fördereinrichtungen aneinandergereiht beweglich längs der Förderstrecke geführt sein, insbesondere wobei die Wartungseinrichtung in diesem Fall einen integralen Bestandteil der Förderstrecke bilden kann. Insoweit kann eine Fördereinrichtung mit der Wartungseinrichtung ausgetauscht sein.

Die Fördervorrichtung kann eine fest an der Förderstrecke verbaute Detektionseinrichtung aufweisen. Die Detektionseinrichtung kann ortsfixiert sein, d.h. beim Bewegen der Fördereinrichtung(en) nicht mitbewegt werden. Die Detektionseinrichtung kann einen Sensor und/oder eine Lichtschranke aufweisen, beispielsweise womit Objekte erfasst und/oder gemessen werden können. Typischerweise ist die Detektionseinrichtung bezüglich der Fördereinrichtung(en) in bestimmter Höhe und/oder mit bestimmtem Winkel angeordnet bzw. ausgerichtet. Die Detektionseinrichtung kann verstellt werden. Bei ordnungsgemäßer Funktion der Detektionseinrichtung kann diese beispielsweise auf bestimmter Höhe Objekte erfassen und/oder erkennen, ob die jeweilige Fördereinrichtung ein Objekt fördert.

Die Sensorik weist eine Kamera auf der Oberseite und vorzugsweise eine Kamera auf der Unterseite auf. Beispielsweise kann die Sensorik bzw. die Kamera in Förderrichtung und/oder entgegen der Förderrichtung, und/oder nach oben oder nach unten weisend, ausgerichtet sein. Die Sensorik kann zur/zu den nächstgelegenen Fördereinrichtung(en) gerichtet sein.

Die Sensorik erfasst eine Umhausung der Förderstrecke. Die Sensorik stellt als Informationen ein Bild- bzw. Videosignal bereit. Das Signal der Kamera ermöglicht es, zu wartende Stellen, liegengebliebene Objekte, geometrische Abweichungen in der Förderstrecke oder dergleichen erkennen zu können.

Mit Vorteil kann die Sensorik eine Beleuchtungseinrichtung zum Ausleuchten der Förderstrecke aufweisen. Die Beleuchtungseinrichtung ist insbesondere zum Ausleuchten der Förderstrecke ausgebildet bzw. speziell dafür eingerichtet. Die Beleuchtungseinrichtung weist beispielsweise eine LED-Lichtquelle insbesondere in Verbindung mit einem Reflektor für das von der LED-Lichtquelle ausgehende Licht auf. Eine Kamera kann mit der Beleuchtungseinrichtung kombiniert werden, um ein besonders helles bzw. kontrastreiches Bild- bzw. Videosignal von den oftmals schlecht beleuchteten Innenteilen der Fördervorrichtung zu erhalten.

Insbesondere kann die Sensorik motorisch richtungsverstellbar sein. Beispielsweise können Kamera und Beleuchtungseinrichtung gemeinsam richtungsverstellt werden. Es kann ein Verstellmotor vorgesehen sein. Beispielsweise kann vorgesehen sein, die Sensorik in einem Wirkungsbereich von wenigstens 45°, vorzugsweise wenigstens 90°, bevorzugt wenigstens 180°, insbesondere 360°, richtungsverstellen zu können. Beispielsweise kann sich der Wirkungsbereich in einer horizontalen Ebene der Förderstrecke und um eine vertikale Achse bzw. Hochachse erstrecken. Insoweit kann bis zu einer vollständigen Umdrehung der Sensorik um die vertikale Achse durchgeführt werden. Die Sensorik kann optional auch um eine oder zwei weitere Achsen im Raum richtungsverstellt werden. So kann zielgerichtet von der Wartungseinrichtung ausgehend längs der Förderstrecke eine Inspektion durchgeführt werden, insbesondere während des Betreibens der Fördervorrichtung.

Es kann eine Fernsteuerung zum Fernsteuern bzw. Fernbedienen der Förderstrecke und/oder der Wartungseinrichtung vorgesehen sein. Die Fernsteuerung ist insbesondere zum Fernsteuern bzw. Fernbedienen ausgebildet bzw. speziell dafür eingerichtet. Die Fernsteuerung ist insbesondere zur Darstellung bzw. zum Anzeigen von den Informationen ausgebildet, beispielsweise mittels Display. Die Fernsteuerung kann als mobiles und/oder batteriebetriebenes Gerät ausgebildet sein. Die Fernsteuerung kann durch ein Computergerät, beispielsweise Laptop, Smartphone und/oder Tabletcomputer, bereitgestellt werden.

Die Fernsteuerung weist typischerweise ein Eingabegerät, beispielsweise eine Tastatur und/oder einen Touchscreen, und/oder ein Ausgabegerät, beispielsweise Display und/oder Lautsprecher, auf. Die Fernsteuerung kann beispielsweise zur Richtungsverstellung der Sensorik und/oder Vorgabe einer Fördergeschwindigkeit und/oder Förderrichtung der Förderstrecke eingerichtet sein. Die Fernsteuerung ist insbesondere zur Kommunikation mit der Wartungseinrichtung ausgebildet, beispielsweise um die Informationen zu übertragen und/oder Steuerungsbefehle zu versenden. Die Kommunikation ist vorzugsweise eine kabellose und/oder kabelgebundene und/oder bidirektionale Kommunikation, beispielsweise unter Verwendung eines kabellosen Kommunikationsverfahrens wie 4G, 5G, WLAN und/oder Bluetooth. Die Fernsteuerung erleichtert die Wartung bzw. Reparatur der Fördervorrichtung.

Vorzugsweise ist eine Visualisierungseinrichtung vorgesehen. Die Visualisierungseinrichtung kann ein Display und/oder eine Projektionsvorrichtung aufweisen, beispielsweise um die Informationen darzustellen bzw. zu visualisieren. Die Visualisierungseinrichtung ist insbesondere zur Darstellung von den Informationen mittels Augmented-Reality und/oder Virtual-Reality ausgebildet. Die Visualisierungseinrichtung kann eine 3D-Brille, VR-Brille oder dergleichen aufweisen. Die Visualisierungseinrichtung kann beispielsweise mit der Fernsteuerung und/oder der Wartungseinrichtung kommunizieren, insbesondere kabellos und/oder kabelgebunden und/oder bidirektional, beispielsweise unter Verwendung eines/des kabellosen Kommunikationsverfahrens wie 4G, 5G, WLAN und/oder Bluetooth.

Beispielsweise können mittels der Visualisierungseinrichtung die Informationen, insbesondere ein Bild- bzw. Videosignal, angezeigt werden, insbesondere in Echtzeit. Es ist möglich, dass die Informationen bildstabilisiert angezeigt werden. Beispielsweise können Vibrationen der Wartungseinrichtung und/oder der Fördereinrichtung(en) kompensiert werden.

Insbesondere ist die Wartungseinrichtung eingerichtet, um unabhängig vom Rest der Fördervorrichtung betrieben werden zu können. Insbesondere ist die Wartungseinrichtung unabhängig von einer die Fördereinrichtung bzw. Förderstrecke steuernden Anlagensteuerung der Fördervorrichtung betreibbar.

Vorzugsweise ist eine Ortungseinrichtung zur Ermittlung einer Position der Wartungseinrichtung längs der Förderstrecke vorgesehen. Insbesondere weist die Wartungseinrichtung eine Markierung auf, um eine Position der Wartungseinrichtung optisch zu markieren. Bei der Markierung kann es sich um ein auffälliges Element handeln, beispielsweise eine Fahne. Als Markierung kann alternativ oder ergänzend eine Leuchte vorgesehen sein. Die Ortungseinrichtung kann auch einen Lautsprecher aufweisen, um Töne auszugeben. Alternativ oder ergänzend kann die Ortungseinrichtung eine Position der Wartungseinrichtung längs der Förderstrecke ermitteln und die Position als Teil der Information bereitstellen. Mittels der Ortungseinrichtung kann ein Nutzer die Stelle, an der die Wartungseinrichtung sich befindet, leichter erkennen.

Die Förderstrecke kann eine Umhausung aufweisen, insbesondere um die Fördereinrichtung seitlich und/oder unterseitig abzudecken. Die Umhausung kann zumindest abschnittsweise längs der Förderstrecke vorgesehen sein. Die Umhausung kann Öffnungen bzw. Klappen aufweisen, um insbesondere aus seitlicher Richtung abschnittsweisen Zugang zur Förderstrecke zu erhalten. Die Umhausung weist vorzugsweise wenigstens eine Seitenwand oder zwei gegenüberliegende Seitenwände auf. Zwischen der Fördereinrichtung und der Umhausung bzw. Seitenwand kann ein Spalt vorgesehen sein, beispielsweise mit einer Breite von wenigstens 0,5 cm und beispielsweise höchstens 10 cm. Die Umhausung kann zum seitlichen Begrenzen bzw. als Randbegrenzung der Förderstrecke ausgebildet sein. Die Umhausung dient als Randbegrenzung an den Seiten de Fördereinrichtung.

Die Umhausung kann auch abschnittsweise unterhalb von der Fördereinrichtung angeordnet sein. Die Umhausung sorgt insbesondere für seitlichen Schutz und ggf. Schutz von oben oder unten. Die Umhausung schützt insbesondere die bewegte Fördereinrichtung gegen unbeabsichtigte Personeneingriffe. Die Umhausung kann als Führungshilfe für Objekte und/oder Fördereinrichtungen vorgesehen sein.

Vorteilhaft weist die Wartungseinrichtung eine insbesondere fernbedienbare Aktoreinrichtung auf. Die Aktoreinrichtung ist insbesondere zum Durchführen von Wartungsarbeiten an der Förderstrecke ausgebildet bzw. speziell dafür eingerichtet. Die Aktoreinrichtung ist insbesondere zur Durchführung von Bewegungen im Raum bzw. relativ zur Förderstrecke ausgebildet. Beispielsweise kann die Wartungseinrichtung mittels einer/der Fernsteuerung fernbedient werden, wobei die Aktoreinrichtung dabei eine gesteuerte Bewegung und/oder Wartungsarbeiten durchführen kann. Beispielsweise kann die Aktoreinrichtung zum Auswechseln, Bewegen und/oder Verformen von Teilen bzw. Abschnitten der Fördervorrichtung und/oder Objekte ausgebildet bzw. speziell dafür eingerichtet sein. Die Aktoreinrichtung zeichnet sich typischerweise dadurch aus, dass sie eine aktuierte Relativbewegung in Bezug auf die Förderstrecke bzw. auf eine Fördereinrichtung, insbesondere in Bezug auf die Wartungseinrichtung selbst abseits von der Aktoreinrichtung, durchführen kann. Die Aktoreinrichtung kann elektrisch, hydraulisch und/oder pneumatisch ansteuerbar ausgebildet sein. Es können auch mehrere Aktoreinrichtungen vorgesehen sein, beispielsweise eine oder mehrere auf der Oberseite und/oder eine oder mehrere auf der Unterseite. Typischerweise weist die Aktoreinrichtung einen oder mehrere Antriebe auf.

Mit Vorteil kann die Aktoreinrichtung einen Roboterarm aufweisen bzw. von einem Roboterarm gebildet sein, insbesondere wobei der Roboterarm mit der Sensorik und/oder einem Werkzeug bevorzugt zum Bewegen von einem Objekt versehen ist bzw. dieses aufweist. Das Werkzeug ist insbesondere zum Bewegen von einem Objekt ausgebildet bzw. speziell dafür eingerichtet. Das Werkzeug kann beispielsweise einen Greifer aufweisen. Es können mehrere Werkzeuge insbesondere an einem Roboterarm vorgesehen sein. Der Roboterarm weist typischerweise eine Mehrzahl voneinander beabstandeter Schwenkachsen sowie wenigstens ein Roboterarmelement mit wenigstens zwei der Schwenkachsen auf. Ein Roboterarm ist erfahrungsgemäß sehr flexibel in Bezug auf anfallende Reparaturen und Wartungsarbeiten.

Bei dem hier vorgeschlagenen Verfahren kann durch Vergleichen der erhaltenen Informationen mit den vorbekannten Informationen eine geometrische Abweichung lokalisiert werden. Die geometrische Abweichung kann ein liegengebliebenes und/oder festgeklemmtes Objekt umfassen. Alternativ oder ergänzend kann die geometrische Abweichung eine zumindest abschnittsweise geöffnete und/oder defekte Umhausung der Förderstrecke sein bzw. umfassen. Alternativ oder ergänzend kann die geometrische Abweichung einen Schaden an der Förderstrecke, einen Riss bzw. eine Rissbildung und/oder Verschleißspuren bzw. Abnutzungen sein bzw. umfassen. Alternativ oder ergänzend kann die geometrische Abweichung eine insbesondere grobe Verschmutzung sein bzw. umfassen. Es hat sich herausgestellt, dass diese geometrischen Abweichungen eine häufige Fehlerquelle im Betrieb der Fördervorrichtung sind. Außerdem hat sich herausgestellt, dass sich diese geometrischen Abweichungen mit dem angebotenen Verfahren gut erkennen lassen.

Beispielsweise kann die Förderstrecke mittels des Vergleichs während des Betriebs überwacht und/oder inspiziert werden, um rasch Probleme zu erkennen und deren Ursache abzustellen.

Bei dem hier vorgeschlagenen Verfahren kann durch Vergleichen der erhaltenen Informationen mit den vorbekannten Informationen die Funktion und/oder Ausrichtung der Detektionseinrichtung geprüft werden. Beispielsweise kann festgestellt werden, auf welche Höhe die Detektionseinrichtung bzw. die Lichtschranke eingestellt ist, wie sie ausgerichtet ist, und/oder ob sie ordnungsgemäß funktioniert. Es kann eine Signalkontrolle der Detektionseinrichtung durchgeführt werden. Insgesamt kann so die Funktionalität der Fördervorrichtung geprüft werden, etwa um bei Unregelmäßigkeiten eingreifen zu können. Beispielsweise kann die Förderstrecke in einem Abschnitt mit der Detektionseinrichtung erfasst werden. Die vorbekannten Informationen können sich insbesondere auf die Detektionseinrichtung bzw. den Abschnitt mit der Detektionseinrichtung beziehen. Insoweit kann das Vergleichen sich fokussiert auf die Detektionseinrichtung beziehen, um deren Funktion sicherzustellen.

Die Förderstrecke kann umlaufend erfasst werden. Beispielsweise kann die Förderstrecke kontinuierlich, bei jedem Durchlauf und/oder im Wesentlichen dauerhaft erfasst werden, um möglichst in Echtzeit auf Probleme reagieren zu können. So mag die Förderstrecke alternativ oder ergänzend in regelmäßigen zeitlichen Abständen erfasst werden, beispielsweise stündlich oder täglich, um Ressourcen zu sparen.

Das Betreiben und das Erfassen und optional das Vergleichen können zeitgleich durchgeführt werden. Die Schritte des Verfahrens können sich zeitlich überlappen oder auch nacheinander durchgeführt werden. Grundsätzlich kann während des Bewegens und ebenfalls unabhängig vom Bewegen das Erfassen durchgeführt werden. Das Vergleichen kann auch zeitlich nachgelagert sein, beispielsweise indem zunächst die Informationen gesammelt werden und später durch das Vergleichen ausgewertet werden. Vorzugsweise werden Betreiben, Erfassen und Vergleichen zeitgleich durchgeführt, um möglichst schnell Probleme an der Förderstrecke erkennen zu können.

Die Wartungseinrichtung kann auf der und/oder unter der Fördereinrichtung, insbesondere daran, festgelegt sein. Beispielsweise kann die Wartungseinrichtung an der jeweiligen Fördereinrichtung befestigt und/oder fixiert sein. Damit wird sichergestellt, dass die erhaltenen Informationen zu verschiedenen Zeitpunkten möglichst einheitlich sind. Auch in Verbindung mit der Umhausung kann die Einheitlichkeit der erhaltenen Informationen verbessert werden.

Es kann ein Erzeugen der vorbekannten Informationen durch ein initiales Erfassen der Förderstrecke mittels der Wartungseinrichtung vorgesehen sein. Das initiale Erfassen wird vorzugsweise durchgeführt, wenn die Förderstrecke zum Fördern von Objekten betriebsbereit ist und sich in einem Initialzustand befindet. Anders gesagt soll die Förderstrecke fehlerfrei und im Idealzustand sein, wenn die vorbekannten Informationen erfasst werden. Es ist auch denkbar, dass erhaltene Informationen zu vorbekannten Informationen gemacht werden, um spontan aufgetretene und/oder minimale geometrische Abweichungen erkennen zu können.

Bei dem Verfahren kann die Wartungseinrichtung fernbedient werden, insbesondere wobei die Informationen mittels einer/der Fernsteuerung und/oder einer/der Visualisierungseinrichtung, die zur Darstellung von den Informationen mittels Augmented-Reality und/oder Virtual-Reality ausgebildet ist, dargestellt und/oder abgespeichert werden. Beispielsweise kann ein Nutzer die Förderstrecke fernsteuern, um die Wartungseinrichtung zu der geometrischen Abweichung und/oder zur Detektionseinrichtung zu bewegen, insbesondere während der Nutzer einen visuellen Einblick in das Innere der Fördervorrichtung erhält.

Bei dem Verfahren kann die Wartungseinrichtung Wartungsarbeiten durchführen. Die Wartungsarbeiten können durch einen Nutzerbefehl und/oder nutzergesteuert ausgeführt werden. Die Wartungsarbeiten können eine Reparatur der Förderstrecke und/oder ein Bewegen eines liegengebliebenen Objektsund/oder ein Ausrichten und/oder Prüfen der Funktion der Detektionseinrichtung umfassen. Beispielsweise können Teile der Fördervorrichtung inspiziert, repariert und/oder ausgetauscht werden. Die Detektionseinrichtung kann höhenverstellt werden und/oder es kann eine Signalkontrolle der Detektionseinrichtung durchgeführt werden. Bei dem Verfahren kann letztlich vorgesehen sein, dass eine Wartung bzw. Reparatur an der Förderstrecke durchgeführt wird. Insbesondere kann ein lokaler Defekt, beispielsweise ein liegengebliebenes Objekt, eine geometrische Verformung und/oder eine verstellte Detektionseinrichtung, mithilfe der Aktoreinrichtung und insbesondere gesteuert mittels Fernsteuerung und/oder Visualisierungseinrichtung, durch Nutzerbedienung beseitigt werden. Beispielsweise kann die Wartungseinrichtung die Detektionseinrichtung einstellen bzw. justieren, insbesondere automatisch.

Es können erhaltene Informationen und/oder Daten zu den durchgeführten Wartungsarbeiten in einer Datenbank abgespeichert werden. Sich wiederholende Wartungsarbeiten können unter Berücksichtigung der abgespeicherten Daten automatisiert durchgeführt werden. Die Datenbank kann von der Wartungseinrichtung, der Fernsteuerung, einem zentralen Computergerät bzw. einem, bevorzugt ortsfesten, Datenerhaltungssystem und/oder einer Cloud bereitgestellt werden. Es kann ein Zwischenspeicher vorgesehen sein. Es ist möglich, dass die Fördervorrichtung derart ausgebildet ist, dass eine zeitweise Unterbrechung einer, bevorzugt kabellosen, Kommunikationsverbindung zwischen der Wartungseinrichtung und der Datenbank nicht zum Datenverlust führt. Die durch eine zeitweise Unterbrechung nicht übertragenen Informationen bzw. Daten können in dem Zwischenspeicher zwischengespeichert und bei Wiederherstellung der Datenverbindung an die Datenbank übertragen werden.

Insbesondere kann ein lernendes System vorgesehen sein, bei welchem bereits durchgeführte Wartungsarbeiten bzw. Reparaturen abgespeichert werden und später bei erneutem Auftreten nach bereits bekanntem Muster automatisch ausgeführt werden können. Die sich wiederholenden Wartungsarbeiten können nicht nur Reparaturen, sondern auch liegengebliebene bzw. verklemmte Objekte oder Ausrichten bzw. Prüfen der Detektionseinrichtung betreffen. Beispielsweise ist es möglich, dass ein Warten und/oder Reparieren einer bestimmten Stelle der Förderstrecke automatisiert durchgeführt wird, wenn die Wartungseinrichtung entsprechend angelernt worden ist. Beispielsweise kann eine Schmierung bestimmter mechanischer Teile automatisiert werden. Auch können für das Verklemmen von Objekten anfällige Stellen der Fördervorrichtung durch Bewegen des Objektsmittels Wartungseinrichtung automatisiert abgearbeitet werden.

Die geometrische Abweichung kann eine insbesondere grobe Verschmutzung und/oder eine zu reinigende bzw. verschmutzte Stelle der Förderstrecke umfassen. Die Wartungseinrichtung kann zum Reinigen der Förderstrecke und/oder der Detektionseinrichtung ausgebildet sein. Beispielsweise kann die Wartungseinrichtung Reinigungsmittel oder Reinigungswerkzeug aufweisen, beispielsweise eine Bürste oder eine Druckluftdüse zum gerichteten Ausgeben von Druckluft. Der Roboterarm kann zum Reinigen ausgebildet sein. Beispielsweise kann das Reinigungsmittel oder Reinigungswerkzeug mittels des Roboterarms an der Förderstrecke verwendet werden. Bei dem Verfahren kann ein Reinigen durch die Wartungseinrichtung vorgesehen sein, beispielsweise ein Reinigen der Förderstrecke und/oder der Detektionseinrichtung, insbesondere mit mechanischem Kontakt (z.B. Bürste) und/oder kontaktlos (z.B. Druckluft).

Die Fördervorrichtung und das Verfahren können mit den nachfolgenden Merkmalen jeweils vorteilhaft weitergebildet werden.

Die Wartungseinrichtung kann ein Reinigungssystem aufweisen. Das Reinigungssystem kann als Reinigungsmittel bzw. Reinigungswerkzeug verstanden werden oder ein solches umfassen. Das Reinigungssystem kann wenigstens teilweise oder vollständig Bestandteil des Werkzeugs sein.

Das Reinigungssystem kann zum Lösen von Verschmutzungen an der Förderstrecke eingerichtet sein. Das Reinigungssystem kann zum Aufnehmen von Verschmutzungen eingerichtet sein. Beispielsweise kann das Reinigungssystem ein Sammelsystem für Verschmutzungen aufweisen. Das Reinigungssystem kann zum Absaugen bzw. Aufsaugen von Verschmutzungen eingerichtet sein bzw. eine Absaugung und/oder einen Staubsauger aufweisen. Das Reinigungssystem kann einen/den Sauger bereitstellen. Das Reinigungssystem kann zumindest abschnittsweise an der Aktoreinrichtung festgelegt sein. Das Reinigungssystem kann ein, insbesondere rotierendes, Bürstensystem und/oder Schabersystem aufweisen, das, insbesondere festhaftende, Verschmutzungen lösen kann und/oder einer Absaugung zuführen kann. Das Bürstensystem und/oder Schabersystem kann seine zum Betreiben erforderliche Energie aus der Bewegung der Wartungseinrichtung längs der Förderstrecke beziehen.

Das Reinigungssystem ist insbesondere derart ausgeführt, dass eine Selbstentzündung, eine Explosion und/oder ein Brand von aufgenommenen Verschmutzungen verhindert wird. Beispielsweise können Verschmutzungen derart gesammelt werden, dass von den gesammelten Verschmutzungen in der Wartungseinrichtung eine möglichst geringe Stauberzeugung ausgeht. Beispielsweise weist das Sammelsystem einen Filter auf, um Staub in einer Abluft zu vermeiden oder zu reduzieren. Beispielsweise ist das Reinigungssystem ausgebildet, eine insbesondere gefilterte Abluft im Wesentlichen entgegengesetzt zu einer Bewegungsrichtung der Wartungseinrichtung auszustoßen. Beispielsweise kann ein Befeuchtungssystem zur Befeuchtung der Verschmutzungen vorgesehen sein. Beispielsweise kann ein Löschsystem zum Löschen von einem Brand vorgesehen sein. Beispielsweise kann ein System zum Ableiten von statischen Aufladungen der Wartungseinrichtung vorgesehen sein, um Funkenentladungen zu vermeiden.

Die Wartungseinrichtung kann ein Aufnahmesystem aufweisen, um Fremdkörper von der Förderstrecke aufzunehmen und/oder in einem Aufnahmebehälter des Aufnahmesystems zu deponieren. Das Aufnahmesystem und/oder das Reinigungssystem kann einen/den Filter aufweisen, um Staub zurückzuhalten. Das Aufnahmesystem kann Bestandteil des Reinigungssystems bzw. des Sammelsystems sein.

Die Förderstrecke kann eine Schiene und insbesondere zur Befestigung der Schiene eine Blechkonstruktion und/oder eine Trägerkonstruktion aufweisen. Die Wartungseinrichtung und die Fördereinrichtung(en) können längs der Schiene und in Kontakt mit der Schiene bewegt werden. Der Antrieb der Förderstrecke kann zum Antreiben der an/auf der Schiene angeordneten Wartungseinrichtung(en) und Fördereinrichtung(en) eingerichtet sein.

Die Wartungseinrichtung kann zur Erkennung bzw. zum Erkennen von Rissen an der bzw. in Teilen der Förderstrecke eingerichtet sein. Risse können verortet bzw. lokalisiert werden. Das Erkennen kann im Rahmen des Vergleichens realisiert werden. Risse können als geometrische Abweichung verstanden werden. Beispielsweise können Risse in der Schiene, der Blechkonstruktion und/oder der Trägerkonstruktion der Förderstrecke erkannt werden. Zum Erkennen von Rissen kann eine Marker-Substanz verwendet und/oder von der Wartungseinrichtung an der Förderstrecke appliziert werden, beispielsweise eine fluoreszierende und/oder UV-sensitive Marker-Substanz. Die Marker-Substanz kann sich bei einer Benetzung von Oberflächen mit derselben in Spalten bzw. Rissen durch Kapillarkräfte sammeln, so dass die Spalte bzw. Risse optisch leicht detektierbar werden.

Die Wartungseinrichtung kann die Marker-Substanz anleuchten und über die Sensorik können Informationen bezüglich der Risse erhalten werden. Beispielsweise können Lichtbilder erstellt werden, die ausgewertet werden können. Beispielsweise können Risse durch eine computerimplementierte Analyse von den Informationen erkannt und verortet werden. Beispielsweise kann die Beleuchtungseinrichtung eine UV-Lichtbestrahlung durchführen, um Risse mittels der UV-sensitiven Marker-Substanz erkennen zu können. Es kann auch eine Kamera bzw. ein optisches Überwachungssystem mit einem Polfilter zum Einsatz kommen. Beispielsweise können Risse mittels Ultraschallprüfung erkannt werden.

Die Sensorik, insbesondere die Kamera, kann einen/den Polfilter aufweisen, beispielsweise um störende Reflektionen zu verringern und/oder zur Erkennung von Rissen.

Die Wartungseinrichtung kann ein Kollisionsschutzsystem aufweisen, um Kollisionen mit Fremdkörpern und/oder Objekten zu vermeiden bzw. deren Auswirkungen zu reduzieren. Das Kollisionsschutzsystem ist beispielsweise zum Erkennen von Verschmutzungen bzw. Fremdkörpern ausgebildet. Das Kollisionsschutzsystem kann die Fördervorrichtung, insbesondere die Wartungseinrichtung(en) und/oder die Fördereinrichtung(en), anhalten, um Kollisionen zu vermeiden. Beispielsweise kann das Kollisionsschutzsystem ein Not-Halt-Signal erzeugen und zumindest mittelbar an den Antrieb senden, um diesen zu stoppen.

Die Wartungseinrichtung kann batteriebetrieben sein und insbesondere längs der Förderstrecke bzw. von der Förderstrecke mit Elektrizität gespeist werden. Die Wartungseinrichtung kann eine Energieversorgung aufweisen, beispielsweise einen Energiespeicher, der mit der Wartungseinrichtung mitfährt. Der Energiespeicher kann eine Batterie bzw. einen Akkumulator umfassen. Mit der Energieversorgung kann ein unabhängiger Betrieb der Wartungseinrichtung ermöglicht werden.

Die Wartungseinrichtung kann zumindest eine Montagekonsole aufweisen, beispielsweise um die Sensorik und/oder um weitere Sensorik zum Erfassen der Förderstrecke bzw. zum Erhalten von Informationen daran anzuordnen. Beispielsweise kann die (weitere) Sensorik zur Schwingungsmessung und/oder Lastmessung eingerichtet sein. Die zumindest eine Montagekonsole kann an einer für die jeweilige Messung relevanten Stelle der Wartungseinrichtung angeordnet sein, beispielsweise im Bereich von einer Rolle, insbesondere Tragrolle und/oder Führungsrolle, der Wartungseinrichtung.

Die Wartungseinrichtung bzw. die Sensorik kann zur Geräuschüberwachung und/oder Schwingungsüberwachung ausgebildet sein, insbesondere zur Überwachung an der Wartungseinrichtung selbst. Beispielsweise kann bei Bewegung der Wartungseinrichtung die Akustik an der Wartungseinrichtung überwacht werden, um Rückschlüsse auf Wartungsbedarf an der Förderstrecke zu ziehen. Es ist auch möglich, Rückschlüsse auf Wartungsbedarf an der Wartungseinrichtung selbst zu ziehen. Beispielsweise verändert sich die Akustik, wenn Rollen an der Fördervorrichtung bzw. Wartungseinrichtung verschleißen. Es können über die Akustik Unebenheiten und/oder Fehler im Verlauf der Förderstrecke erkannt werden, die auch als geometrische Abweichungen bezeichnet werden können.

Die Wartungseinrichtung bzw. die Sensorik kann als akustisches und/oder schwingungstechnisches Diagnosesystem ausgebildet sein und/oder dieses aufweisen, beispielsweise um Unregelmäßigkeiten im Abrollverhalten von Rollen, insbesondere Tragrollen und/oder Führungsrollen, der Wartungseinrichtung und/oder der Fördereinrichtung zu erkennen und längs der Förderstrecke zu verorten. Das Diagnosesystem kann Unregelmäßigkeiten in einer Fahrbahnbeschaffenheit bzw. geometrische Abweichungen der Förderstrecke erkennen und verorten.

Die Wartungseinrichtung kann zur Online-Diagnostik bzw. Live-Diagnostik und/oder zur Aufzeichnung von Diagnostik eingerichtet sein. Insoweit können die mittels der Sensorik erhaltenen Informationen direkt ausgewertet bzw. angezeigt werden und/oder aufgezeichnet bzw. abgespeichert werden. Das Abspeichern erfolgt insbesondere in einer/der Datenbank.

Die Wartungseinrichtung kann ein Kommunikationssystem bzw. eine Kommunikationsschnittstelle aufweisen, das zur insbesondere kabellosen und/oder kabelgebundenen Kommunikation, bevorzugt mit einer/der Fernsteuerung, ausgebildet sein kann. Die Kommunikation ist vorzugsweise eine kabellose und/oder kabelgebundenen und/oder bidirektionale Kommunikation, beispielsweise unter Verwendung eines kabellosen Kommunikationsverfahrens wie 4G, 5G, WLAN und/oder Bluetooth.

Die Wartungseinrichtung bzw. die Sensorik kann zur, bevorzugt vertikalen, Abstandsüberwachung eingerichtet sein, insbesondere um ein Luftspaltmaß bzw. einen Luftspalt zwischen den Fördereinrichtungen und Antrieben der Förderstrecke und/oder zwischen den Fördereinrichtungen und Schienen der Förderstrecke festzustellen. Das Luftspaltmaß liegt bevorzugt auch zwischen Wartungseinrichtung und Antrieb bzw. Schienen vor. Das Luftspaltmaß kann eine der erhaltenen Informationen sein. Bevorzugt sind die Fördereinrichtungen jeweils zumindest im Wesentlichen parallel zu einem Antrieb bzw. einer Schiene angeordnet, d.h. längs der Förderstrecke und/oder quer zur Förderstrecke parallel zu einem Antrieb bzw. einer Schiene angeordnet. Abweichungen zur Parallelität können mittels Luftspaltmessung festgestellt werden.

Die Wartungseinrichtung kann zur Messung eines/des Luftspalts bzw. Luftspaltmaßes der Förderstrecke ausgebildet sein. Die Wartungseinrichtung bzw. die Sensorik kann ein Messystem zur Luftspaltmessung zwischen Antrieb bzw. Linearantrieb der Förderstrecke und einem Boden und/oder der Unterseite der Wartungseinrichtung und/oder zwischen Antrieb bzw. Linearantrieb der Förderstrecke und einem Boden und/oder der Unterseite einer Fördereinrichtung umfassen. Jedem Antrieb der Förderstrecke kann insoweit zumindest ein, bevorzugt mehrere, Luftspalt bzw. Luftspaltmaß zugeordnet werden. Das Messystem kann die Luftspaltmaße bewerten, beispielsweise hinsichtlich der Entscheidung ob an einem oder mehreren Antrieben Wartungsbedarf vorliegt oder nicht. Das Messsystem kann den Luftspalt beispielsweise kamerabasiert bzw. optisch messen. Das Messsystem kann den Luftspalt beispielsweise mittels Lidar- oder Radarsensor und/oder lasergestützt messen.

Luftspalte bzw. Luftspaltmaße können, insbesondere während einer Bewegung der Fördereinrichtung(en) und der Wartungseinrichtung(en), längs der Förderstrecke und/oder quer zur Förderstrecke gemessen werden. Luftspalte längs der Förderstrecke können Schiefstellungen bzw. Längsverwindungen von Fördereinrichtungen indizieren. Luftspalte quer zur Förderstrecke können Querverwindungen von Fördereinrichtungen indizieren. Bei falsch eingestelltem, beispielsweise zu geringem, Luftspaltmaß kann es zu Reibung oder einem Verklemmen oder zu Fehlfunktionen im Betrieb kommen.

Um einen Luftspalt einzustellen, kann beispielsweise eine Position eines Antriebs an der Förderstrecke verstellt werden. Das kann automatisch oder manuell erfolgen.

Es ist möglich, dass erhaltene Informationen reproduzierbar abgespeichert werden, insbesondere in einer/der Datenbank.

Die erhaltenen Informationen umfassen insbesondere einen Standort bzw. Ortungsinformationen. Die geometrischen Abweichungen, insbesondere die Luftspaltmaße, können ortsbezogen bestimmt werden. Die Luftspaltmaße können längs der Förderstrecke verortet und/oder einem einzelnen Antrieb der Förderstrecke zugeordnet werden. Insoweit kann das Lokalisieren realisiert werden.

Die Wartungseinrichtung kann zur Messung von Kräften längs der Förderstrecke, insbesondere einer Zugkraft und/oder einer Druckkraft zwischen der Wartungseinrichtung und der nächstgelegenen Fördereinrichtung, ausgebildet sein, beispielsweise um Schwergängigkeit längs der Förderstrecke festzustellen. Beispielsweise können unzulässige Lastwechselspiele zwischen Fördereinrichtungen erkannt bzw. lokalisiert werden.

Im Rahmen der Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" kann stets mit "und/oder" ersetzt werden.

Nachfolgend wird die Erfindung anhand eines bevorzugten Ausführungsbeispiels unter Bezugnahme auf die Zeichnungen weiter im Detail erläutert.

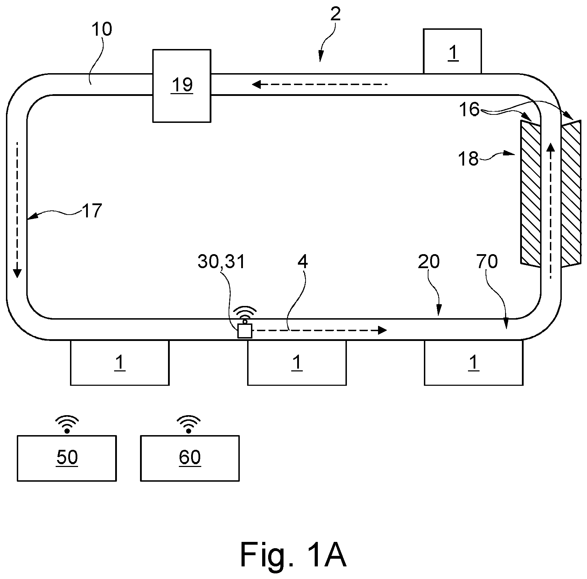

In den Zeichnungen zeigen
- Fig. 1A: eine Fördervorrichtung zum Fördern von Objekten und mit Wartungseinrichtungen in einer schematischen Ansicht,

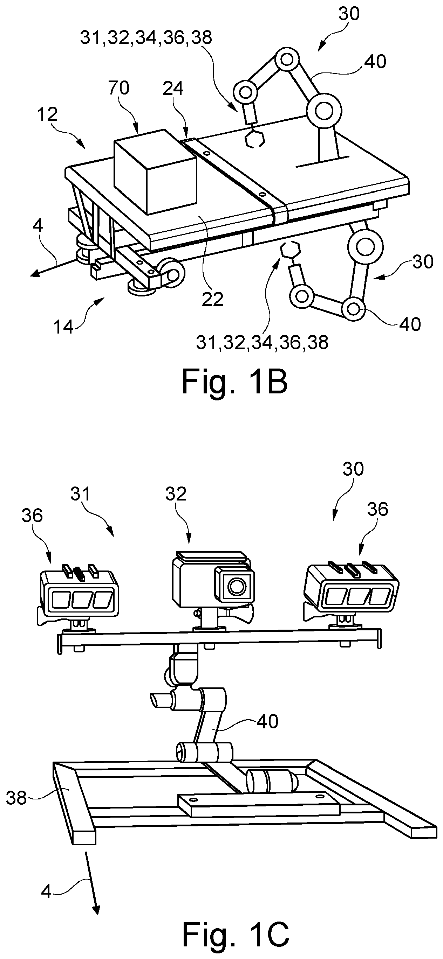

- Fig. 1B: eine Wartungseinrichtung und eine daran angereiht angekoppelte Fördereinrichtung der Fördervorrichtung in einer perspektivischen Ansicht, und
- Fig. 1C: eine Wartungseinrichtung der Fördervorrichtung in einer perspektivischen Ansicht.

Bei in den Figuren verwendeten gleichen Bezugszeichen gilt die nachfolgende Beschreibung entsprechend für die Figuren untereinander. Beschrieben sind Beispiele, die im Rahmen der Ansprüche in verschiedenen Weisen modifiziert und/oder ergänzt werden können.

Fig. 1A zeigt eine Fördervorrichtung 2, die zum Fördern von Objekten 70 ausgebildet ist, aufweisend eine längs einer Förderrichtung 4 endlos bzw. ringförmig bzw. kreisförmig umlaufende Förderstrecke 10. Längs der Förderstrecke 10 sind eine Vielzahl von nicht im Detail dargestellten Fördereinrichtungen 20 und eine Wartungseinrichtung 30 aneinandergereiht bzw. aneinandergekoppelt beweglich geführt. Antriebe 17 entlang der Förderstrecke können diese Kette aus den Fördereinrichtungen 20 und der Wartungseinrichtung 30 umlaufend fortbewegen.

Eine weitere Wartungseinrichtung 30 ist auf einer der Fördereinrichtungen 20 aufgestellt bzw. darauf festgelegt. Die Fördereinrichtungen 20 sind jeweils zum Abladen von einem darauf aufliegenden bzw. geförderten Objekt 70 quer zur Förderstrecke 10 ausgebildet. Außen an der Förderstrecke 10 sind mehrere Sortier- bzw. Verarbeitungsstationen 1 angeschlossen, von denen Objekte 70 auf die Fördereinrichtungen 20 aufgeladen oder von den Fördereinrichtungen 20 zu den Stationen 1 abgeladen werden können. Insbesondere ist die Fördervorrichtung 2 als Querbandsorter bzw. Querbandförderer ausgebildet. Alternativ oder ergänzend ist die Fördervorrichtung 2 als Schalensorter ausgebildet.

Vorliegend handelt es sich um fernsteuerbare bzw. fernbedienbare Wartungseinrichtungen 30, d.h. die Wartungseinrichtungen 30 können Informationen versenden und optional Befehle empfangen und ausführen.

Nicht dargestellt ist eine Fördervorrichtung mit einer Förderstrecke, wobei längs der Förderstrecke genau eine Fördereinrichtung beweglich geführt ist. Beispielsweise könnte dies ein Bandförderer sein, wobei eine Wartungseinrichtung auf dem Bandförderer aufgestellt ist bzw. daran festgelegt ist und mitgefördert wird. Der Bandförderer kann endlos oder auch als Streckenabschnitt mit wenigstens zwei Enden umlaufend ausgebildet sein.

Nicht dargestellt ist eine Fördervorrichtung mit einer Förderstrecke, wobei längs der Förderstrecke mehrere bzw. eine Vielzahl von Fördereinrichtungen zum Fördern von Objekten beweglich angeordnet sind. Beispielsweise könnte dies ein Rollenförderer sein, wobei eine Wartungseinrichtung auf dem Rollenförderer aufgestellt ist und mitgefördert wird. Der Rollenförderer kann endlos oder auch als Streckenabschnitt mit wenigstens zwei Enden umlaufend ausgebildet sein.

Ferner ist in Fig. 1A eine fest an der Förderstrecke 10 verbaute Detektionseinrichtung 19 vorgesehen, die eine oberseitige Lichtschranke aufweist, beispielsweise mit der Funktion, Objekte 70 in einer bestimmten Höhe zu erfassen oder je nach Höhe nicht zu erfassen. Die Detektionseinrichtung 19 ist verstellbar bzw. kann ausgerichtet werden.

Die Förderstrecke 10 weist eine Umhausung 16 auf, um die Fördereinrichtungen 20 und die Wartungseinrichtungen 30 seitlich und optional unterseitig abzudecken. Die Umhausung 16 kann, beispielsweise mittels Deckeln 18 bzw. Klappen abschnittsweise geöffnet werden, um Zugang zur Förderstrecke 10 zu erhalten. Die Deckel 18 bzw. Klappen können als Zäune verstanden werden.

Es ist möglich, dass sich Objekte 70 zwischen Fördereinrichtungen 20 und der Umhausung 16 verklemmen bzw. in einen Spalt geraten. Dann spricht man von einem liegengebliebenen Objekt 70 oder einer liegengebliebenen Sendung. Wenn Objekte 70 vergleichsweise flach sind, können sie auch in den Bereich unterhalb der Förderstrecke 10 gelangen, also zur Unterseite.

Fig. 1B zeigt in einem Ausschnitt der Fördervorrichtung 2 der Fig. 1A eine einzelne Fördereinrichtung 20, die an die Wartungseinrichtung 30 zur gemeinsamen Bewegung aneinandergereiht angekoppelt ist. Die Fördereinrichtungen 20 weisen jeweils eine Auflage 22 zum Aufliegen der Objekte 70 auf, die zum Abladen der jeweils aufliegenden Objekte 70 quer zur Förderrichtung 4 gekippt werden kann und/oder die ein quer zur Förderrichtung 4 orientiertes Förderband ist, das die jeweils aufliegenden Objekte 70 quer zur Förderrichtung 4 abfördern bzw. abladen kann. Die Fördereinrichtungen 20 sind untereinander und ebenfalls die gezeigte Fördereinrichtung 20 ist mit der Wartungseinrichtung 30 in einem Kopplungsbereich 24 gekoppelt. Der Kopplungsbereich 24 schafft Bewegungsspielraum, beispielsweise in Kurven der Förderstrecke 10.

Die Fördereinrichtungen 20 bzw. die Wartungseinrichtung 10 sind mit Rollen versehen, die auf Führungen bzw. Schienen der Förderstrecke 10 geführt sind. Die Rollen sind beispielsweise als Tragrollen bzw. Stützrollen und/oder Führungsrollen ausgebildet. Tragrollen sind im Wesentlichen zum Tragen von Last vorgesehen. Führungsrollen sind im Wesentlichen zum Führen bzw. Lenken vorgesehen.

Die Wartungseinrichtung 30 der Fig. 1B ist vorliegend, wie auch die Fördereinrichtungen 20, schienengeführt und kann mit den Fördereinrichtungen 20 mit gleicher Geschwindigkeit bewegt werden. Die Wartungseinrichtung 30 kann als Wartungszelle betrachtet werden. Die Wartungseinrichtung 30 weist vorliegend zwei fernbedienbare Aktoreinrichtungen 40, die zum Durchführen von Wartungsarbeiten an der Förderstrecke 10 ausgebildet sind, auf, wobei die Aktoreinrichtungen 40 jeweils einen Roboterarm aufweisen, und wobei der jeweilige Roboterarm mit einer Sensorik 31 und einem Werkzeug zum Greifen und Bewegen von einem Objekt 70 versehen ist.

Das Werkzeug kann einen Sauger und/oder eine Vorrichtung zum Greifen von Objekten 70 mittels Unterdruck aufweisen. Objekte 70 können damit wahlweise angesaugt werden, um am Werkzeug temporär festgelegt zu werden und bewegt werden zu können.

Die Sensorik 31 ist jeweils zum Erfassen der Förderstrecke 10 zum Erhalten von Informationen zu einer Oberseite 12 und einer Unterseite 14 der Förderstrecke 14 ausgebildet. Die Sensorik 31 weist eine Kamera 32 auf der Oberseite 12 und eine Kamera 34 auf der Unterseite 14 auf. Ferner weist die Sensorik 31 eine Beleuchtungseinrichtung 36 zum Ausleuchten der Förderstrecke 10, bevorzugt von innen und/oder im Blickfeld der Kamera 32, 34 auf. Die Sensorik 31 ist motorisch richtungsverstellbar. Insbesondere kann die Kamera 32, 34 und/oder der jeweilige Roboterarm richtungsverstellt werden.

Die Wartungseinrichtung 30 weist optional eine Ortungseinrichtung 38 zur Ermittlung einer Position der Wartungseinrichtung 30 längs der Förderstrecke 10 auf. Die Wartungseinrichtung 30 weist eine Markierung auf, beispielsweise eine Fahne, um eine Position der Wartungseinrichtung 30, insbesondere von außen leicht erkennbar, optisch zu markieren.

Fig. 1C zeigt die weitere Wartungseinrichtung 30 der Fördervorrichtung 2, die auf einer Fördereinrichtung 20 festgelegt, beispielsweise darauf platziert und/oder befestigt, werden kann, um längs der Förderrichtung 4 bewegt zu werden. Die Wartungseinrichtung 30 weist eine Kamera 32 auf der Oberseite 12 sowie zumindest eine Beleuchtungseinrichtung 36 auf. Die Kamera 32 und die Beleuchtungseinrichtung 36 sind optional über eine Aktoreinrichtung 40 richtungsverstellbar. Anstelle oder ergänzend zu der Aktoreinrichtung 40 kann auch ein manuell einstellbarer Arm vorgesehen sein.

Die Sensorik 31, insbesondere eine Kamera 32 oder 34 oder beide Kameras 32, 34, ist mit einem Polfilter versehen.

Mit Blick auf Fig. 1A ist eine Fernsteuerung 50, die zum Fernbedienen der Förderstrecke 10 und der Wartungseinrichtungen 30, insbesondere der Aktoreinrichtungen 40, ausgebildet ist, vorgesehen, wobei die Fernsteuerung 50 zur Darstellung von den Informationen ausgebildet ist. Die Wartungseinrichtungen 30 können die Informationen versenden. Die Fernsteuerung 50 kann die Informationen abspeichern, beispielsweise in einer Datenbank. Die Fernsteuerung 50 ist zur kabellosen Kommunikation mit den Wartungseinrichtungen 30 und optional mit der Förderstrecke 10 ausgebildet. Über die Fernsteuerung 50 kann insbesondere durch eine Nutzereingabe die Fördervorrichtung 2 bewegt werden und/oder es kann eine Kamera 32, 34 oder einer der Roboterarme richtungsverstellt werden. Auf der Fernsteuerung 50 ist die von der Sensorik 31 erhaltene Information wenigstens teilweise ersichtlich. Beispielsweise kann ein Nutzer erkennen, ob und wo ein Objekt 70 sich verklemmt hat. Als Fernsteuerung 50 kann ein Smartphone, ein Tablet und/oder ein Computer mit Bildschirm verwendet werden, das über ein kabelloses Kommunikationsverfahren, beispielsweise 4G, 5G, WLAN und/oder Bluetooth, mit der bzw. den Wartungseinrichtungen 30 kommunizieren kann.

Die Wartungseinrichtung 30 ist zur Erkennung von Rissen an der Förderstrecke 10 eingerichtet. Beispielsweise können mittels der Sensorik 31, insbesondere einer oder beiden Kameras 32, 34, Informationen erhalten werden, die die Erkennung der Risse ermöglichen. Die Wartungseinrichtung 30 kann insbesondere im Rahmen eines Betriebsverfahrens ein Vergleichen der erhaltenen Informationen mit vorbekannten Informationen durchführen, um Risse zu erkennen. Es kann eine Marker-Substanz verwendet werden und/oder Risse können lichtoptisch erfasst werden.

Optional vorgesehen ist ein Kollisionsschutzsystem der Wartungseinrichtung 30, um eine Kollision der Wartungseinrichtung 30 mit Objekten 70 und/oder Fremdkörpern zu erkennen. Das Kollisionsschutzsystem kann die Fördervorrichtung 2 anhalten, beispielsweise wenn eine Kollision droht.

Vorliegend ist die Wartungseinrichtung 30 mit einem Energiespeicher versehen bzw. batteriebetrieben, z.B. um das Reinigungssystem und/oder die Sensorik 31 zu betreiben.

Die Wartungseinrichtung 30 ist zur Online-Diagnostik eingerichtet. Das heißt es kann in Echtzeit gewartet warten und/oder es können in Echtzeit Diagnosen durchgeführt werden.

Die Wartungseinrichtung 30 ist zur Geräuschüberwachung bzw. zur Schwingungsüberwachung ausgebildet. Beispielsweise ist ein Diagnosesystem vorgesehen, um Unregelmäßigkeiten im Abrollverhalten von Führungsrollen zu erkennen und zu verorten. Weiter kann die Wartungseinrichtung einen Luftspalt der Förderstrecke 10 messen. Durch diese Kombination kann vorteilhaft ein Wartungsbedarf vereinfacht identifiziert werden.

Die Wartungseinrichtung 30 ist zur Abstandsüberwachung eingerichtet und kann im Rahmen der erhaltenen Informationen bzw. im Rahmen des Vergleichens den Luftspalt bzw. ein Luftspaltmaß zwischen Fördereinrichtungen 20 und Antrieben 17 der Förderstrecke 10 feststellen bzw. messen. Beispielsweise kann das Luftspaltmaß an der Untersite 14 mittels der Sensorik 31, insbesondere der Kamera 34, festgestellt werden. Es kann eine Vielzahl von Luftspaltmaßen bestimmt werden, insbesondere ortsbezogen längs der Förderstrecke 10 und einzelnen Antrieben 17 zugeordnet.

Die Wartungseinrichtung 30 kann ferner eine Zugkraft bzw. eine Druckkraft bestimmen, beispielsweise im Kopplungsbereich zur nächstgelegenen Fördereinrichtung 20, um Lastwechselspiele längs der Förderstrecke 10 erkennen zu können. Die Sensorik 31 kann die Zugkraft bzw. Druckkraft bestimmen. Die Zugkraft bzw. Druckkraft kann im Rahmen der erhaltenen Informationen bzw. im Rahmen des Vergleichens berücksichtigt werden, um Schwergängigkeit festzustellen und ggf. Wartungsbedarf zu identifizieren und optional längs der Förderstrecke 10 zu verorten.

Die Wartungseinrichtung 30 kann, beispielsweise an der Oberseite 12 und/oder der Unterseite 14, eine oder mehrere Montagekonsolen aufweisen. An einer Montagekonsole können Systeme und/oder die Sensorik 31, insbesondere lösbar, befestigt werden. Beispielsweise ist eine Montagekonsole im Bereich von einer Führungsrolle der Wartungseinrichtung, um dort Sensorik 31 vorzusehen.

Optional vorgesehen ist eine Visualisierungseinrichtung 60, die zur Darstellung von den Informationen mittels Augmented-Reality und/oder Virtual-Reality ausgebildet ist. Dabei kann es sich um eine VR-Brille handeln, die ein mit einer Wartung der Fördervorrichtung 2 befasster Nutzer trägt. Die Visualisierungseinrichtung 60 kann in Zusammenwirkung mit der Fernsteuerung 50 oder für sich mit der bzw. den Wartungseinrichtungen 30 kommunizieren, um die Inhalte darzustellen und/oder um die Förderstrecke 10 und/oder die Wartungseinrichtung 30 zu steuern. Die Visualisierungseinrichtung 60 kann über ein kabelloses Kommunikationsverfahren, beispielsweise 4G, 5G, WLAN und/oder Bluetooth, mit der bzw. den Wartungseinrichtungen 30 und/oder der Fernsteuerung 50 kommunizieren.

Alternativ oder ergänzend handelt es sich bei der Visualisierungseinrichtung 60 um ein Display bzw. eine Anzeige, beispielsweise an der Fernsteuerung 50.

Die Visualisierungseinrichtung 60 kann die Informationen oder zumindest Teile der Informationen darstellen. Beispielsweise kann eine von der Förderstrecke 10 an der Wartungseinrichtung 30 ausgehende Live-Übertragung eines Bild- bzw. Videosignals als Teil der Informationen erfolgen, die die Visualisierungseinrichtung 60 anzeigt. Die Informationen können bildstabilisiert angezeigt werden, beispielsweise wenn die Wartungseinrichtung 30 in Bewegung ist. Die Informationen können einschließlich einer Ortsinformation längs der Förderstrecke 10 dargestellt und/oder aufgezeichnet werden, um die Informationen umgehend oder auch nachträglich verorten zu können.

Ein Betriebsverfahren der Fördervorrichtung 2 umfasst ein Bewegen der Wartungseinrichtung 30 bzw. Wartungseinrichtungen 30 längs der Förderstrecke 10, insbesondere indem die Fördereinrichtungen 20 bewegt werden. Die Wartungseinrichtung 30 wird insbesondere durch Kraftaufwand des Antriebs 17 und insbesondere über die Fördereinrichtungen 20 bewegt. Das Betriebsverfahren ist insbesondere wenigstens teilweise computerimplementiert.

Das Betriebsverfahren umfasst ferner ein Erfassen der Förderstrecke 10 mittels der Wartungseinrichtung(en) 30 zum Erhalten von den Informationen. Die Sensorik 31 erfasst die Oberseite 12 und die Unterseite 14, so dass ein Nutzer optisch Einsicht in schwer erreichbare und/oder umhauste Stellen der Förderstrecke 10 nehmen kann.

Das Betriebsverfahren umfasst ferner ein Vergleichen der erhaltenen Informationen mit vorbekannten Informationen über die Förderstrecke 10. Das Vergleichen ist beispielsweise zum Prüfen der Funktion und Ausrichtung der Detektionseinrichtung 19 und zum Lokalisieren einer geometrischen Abweichung in der Förderstrecke 10 vorgesehen. Bei der geometrischen Abweichung kann es sich um ein liegengebliebenes bzw. festgeklemmtes Objekt 70 oder auch Verschmutzungen und um eine abschnittsweise geöffnete bzw. defekte Umhausung 16 handeln.

Bei dem Betriebsverfahren wird die Förderstrecke 10 mittels der Wartungseinrichtung 30 umlaufend erfasst. So wird rasch erkannt, ob und wo eine geometrische Abweichung vorliegt. Das Betreiben, das Erfassen und das Vergleichen werden zeitgleich durchgeführt, wobei insbesondere das Erfassen und das Vergleichen überwiegend bzw. im Wesentlichen computerimplementierte Schritte sind.

Alternativ oder ergänzend wird die Förderstrecke 10 in dem Abschnitt mit der Detektionseinrichtung 19 erfasst, wobei sich die vorbekannten Informationen auf die Detektionseinrichtung 19 beziehen. Im Grunde kann hier das Betriebsverfahren auf die Inspektion bzw. Wartung der Detektionseinrichtung 19 fokussiert werden.

Bei dem Betriebsverfahren kann die Wartungseinrichtung 30 mittels der Aktoreinrichtung 40 Wartungsarbeiten durchführen, wobei die Wartungsarbeiten eine Reparatur der Förderstrecke 10 und ein Bewegen eines liegengebliebenen Objekts70 und das Ausrichten und Prüfen der Detektionseinrichtung 19 umfassen. Es ist möglich, dass Daten zu den durchgeführten Wartungsarbeiten in einer Datenbank abgespeichert werden, wobei sich wiederholende Wartungsarbeiten unter Berücksichtigung der abgespeicherten Daten automatisiert durchgeführt werden können. Die Wartungseinrichtung 30 bzw. deren Aktoreinrichtung 40 ist insbesondere mittels der Fernsteuerung 50 fernbedienbar. Vorteilhaft kann ein Nutzer die Visualisierungseinrichtung 60 verwenden, um die geometrische Abweichung als Überblendung auf die Fördervorrichtung 2 in seinem Blickfeld dargestellt zu bekommen. So kann der Nutzer die Wartungseinrichtung 30 von außen gezielt fernsteuern, um die geometrische Abweichung zu entfernen bzw. zu reparieren oder um Wartungsarbeiten durchzuführen.

Das Betriebsverfahren sieht ferner ein Erzeugen der vorbekannten Informationen durch ein initiales Erfassen der Förderstrecke 10 mittels der Wartungseinrichtung 30 vor, wenn die Förderstrecke 10 zum Fördern von Objekten 70 betriebsbereit ist und sich in einem Initialzustand befindet. Insoweit kann ein ordnungsgemäßer Ursprungszustand bzw. Werkszustand der Förderstrecke 10 festgehalten werden, um geometrische Abweichungen gut in den erhaltenen Informationen erkennen zu können.

Die Wartungseinrichtung 30 hat verschiedene Einsatzmöglichkeiten. Bei dem Betriebsverfahren können mittels der Wartungseinrichtung 30 liegengebliebene Objekte 70 bewegt werden. Es können mittels der Wartungseinrichtung 30 Verschmutzungen als geometrische Abweichungen erkannt werden und insbesondere durch ein Reinigen mittels der Wartungseinrichtung 30 beseitigt werden.

Beispielsweise weist die Wartungseinrichtung 30 ein Reinigungssystem mit dem Sauger auf, das zum Lösen von Verschmutzungen an der Förderstrecke 10 und zum Aufsaugen von den Verschmutzungen eingerichtet ist. Das Reinigungssystem kann zumindest teilweise an der Aktoreinrichtung 40 festgelegt sein, beispielsweise um es zielgerichtet bewegen zu können.

Es ist beispielsweise ein Bürstensystem und ein Schabersystem der Reinigungssystem vorgesehen, um Verschmutzungen durch mechanische Einwirkung mit Bürste bzw. Schaber lösen zu können. Das Reinigungssystem weist ein Sammelsystem für die Verschmutzungen auf. Um Staub, insbesondere durch das Aufsaugen, zu vermeiden, weist das Reinigungssystem einen Filter auf. Eine Abluft vom Aufsaugen wird derart längs der Förderstrecke 10 ausgegeben, dass möglichst wenig Staub entsteht. Beispielsweise wird Abluft längs der Förderstrecke und entgegen der Bewegungsrichtung der Wartungseinrichtung 30 ausgegeben.

Die Wartungseinrichtung 30, hier das Reinigungssystem, weist ein Aufnahmesystem aufweisen, um Fremdkörper bzw. Objekte 70 von der Förderstrecke aufzunehmen und/oder in einem Aufnahmebehälter des Aufnahmesystems zu deponieren.

Die Detektionseinrichtung 19 kann, falls sie verstellt ist, mittels der Wartungseinrichtung 30 ausgerichtet werden. Es kann mittels der Wartungseinrichtung 30 eine geöffnete Umhausung 16, beispielsweise offene Sicherheitseinrichtungen, erkannt und diese ggf. geschlossen werden oder diese können gemeldet werden. Es können mittels der Wartungseinrichtung 30 Beschädigungen an der Umhausung 16 bzw. an Seitenwänden erkannt und diese ggf. repariert werden oder diese können gemeldet werden.

Dargestellt und beschrieben ist insbesondere eine Entwicklung, wobei eine Wartungszelle bzw. Wartungseinrichtung 30, beispielsweise eine wie diejenige aus Fig. 1B, anstelle einer Sorterzelle bzw. Fördereinrichtung 20 bei einem Sorter bzw. einer Fördervorrichtung 2, insbesondere Querbandsorter bzw. Querbandförderer, eingebracht ist. Die Wartungszelle zeichnet sich dadurch aus, dass oberhalb und unterhalb des Sorters bzw. der Förderstrecke 10, also auf der Oberseite 12 und der Unterseite 14, die Umgebung mitlaufend sensorisch, insbesondere lichtoptisch mit Kameras 32, 34 erfasst werden kann. Eine Fernbedienbarkeit der Wartungszelle und des Sorters sind vorgesehen. Es können Verschmutzungen, liegengebliebene Objekte 70, Defekte, fehlende Abdeckungen und dergleichen in einem handbedienten Prozess erkannt werden. Ein Nutzer bzw. Bediener kann die Visualisierungseinrichtung 60 in Form einer VR-Brille tragen und/oder Beobachtungen von der Wartungszelle vom Computer aus durchführen. Die Wartungszelle bzw. Wartungseinrichtung 30 kann abschnittsweise und/oder fortlaufend die Förderstrecke 10 observieren, wenn die Fördervorrichtung 2 betrieben wird. Es kann automatisiert festgestellt werden, ob und wo ein Objekt70 sich verklemmt hat oder anderweitige geometrische Abweichungen oder Wartungsbedarf, z.B. an der Detektionseinrichtung, aufgekommen ist. Das gelingt insbesondere durch den automatisierten Soll-Ist-Vergleich durch den Verfahrensschritt "Vergleichen". Anders gesagt, beispielsweise, können Umgebungsunterschiede abgeglichen werden, was aufgrund einer zumindest abschnittsweise definierten Sollumgebung der Förderstrecke, insbesondere dank einer Umhausung 16, gelingen kann. Es kann automatisch die Position einer "Problemstelle" (verklemmtes/liegengebliebenes Objekt 70, geometrische Abweichung, zu prüfende bzw. einzustellende Detektionseinrichtung, etc.) lokalisiert werden, um entsprechende Wartungsarbeiten bzw. Reparaturen planen bzw. durchführen zu können.

Eine weitere Ausführungsform der Entwicklung sieht vor, dass die Wartungseinrichtung 30, beispielsweise eine wie diejenige aus Fig. 1C, bei einer Fördervorrichtung 2 von einer oder mehreren Fördereinrichtungen 20 bewegt wird. Die Fördervorrichtung 2 kann ein Förderband und/oder ein Rollenförderer sein. Im Grunde kann vorgesehen sein, dass die Wartungseinrichtung 30 wie ein Objekt 70 mitbewegt bzw. gefördert wird. Hierbei kann die Wartungseinrichtung 30 zumindest oberhalb der Förderstrecke 10 der Fördervorrichtung 2 bzw. auf der Oberseite 12 die Umgebung mitlaufend sensorisch erfassen, beispielsweise lichtoptisch mit einer Kamera 32. Auch hier kann eine Fernbedienbarkeit und/oder es können Merkmale vorgesehen sein, wie im vorigen Absatz ausgeführt.

Dargestellt und beschrieben ist eine Fördervorrichtung 2 zum Fördern von Objekten 70, aufweisend eine umlaufende Förderstrecke 10, längs der eine Vielzahl von Fördereinrichtungen 20 und eine Wartungseinrichtung 30 aneinandergereiht beweglich geführt sind, wobei die Fördereinrichtungen 20 jeweils zum Abladen von einem darauf aufliegenden Objekt 70 quer zur Förderstrecke 10 ausgebildet sind, und wobei die Wartungseinrichtung 30 eine Sensorik 31 zum Erfassen der Förderstrecke 10 zum Erhalten von Informationen zu einer Oberseite 12 und/oder einer Unterseite 14 der Förderstrecke 10 aufweist.

Dargestellt und beschrieben ist eine Verwendung einer insbesondere fernsteuerbaren Wartungseinrichtung 30 mit einer Sensorik 31 zum Erfassen einer Förderstrecke 10 einer zum Fördern von Objekten 70 ausgebildeten Fördervorrichtung 2 zum Erhalten von Informationen zu einer Oberseite 12 und/oder einer Unterseite 14 der Förderstrecke 10 in einem die Förderstrecke 10 und die Wartungseinrichtung 30 mit gleicher Geschwindigkeit bewegenden Betrieb der Fördervorrichtung 2, wobei die Fördervorrichtung 2 aneinandergereihte Fördereinrichtungen 20 aufweist, die jeweils zum Abladen von einem darauf aufliegenden Objekt 70 quer zur Förderstrecke 10 ausgebildet sind.

### Bezugszeichenliste

- 2: Fördervorrichtung
- 4: Förderrichtung

- 10: Förderstrecke
- 12: Oberseite
- 14: Unterseite
- 16: Umhausung
- 17: Antrieb
- 18: Deckel
- 19: Detektionseinrichtung

- 20: Fördereinrichtung
- 22: Auflage
- 24: Kopplungsbereich

- 30: Wartungseinrichtung
- 31: Sensorik
- 32: Kamera (Oberseite)
- 34: Kamera (Unterseite)
- 36: Beleuchtungseinrichtung
- 38: Ortungseinrichtung
- 40: Aktoreinrichtung

- 50: Fernsteuerung

- 60: Visualisierungseinrichtung

- 70: Objekt

## Patentansprüche

1. Fördervorrichtung (2) zum Fördern von Objekten (70), aufweisend eine umlaufende Förderstrecke (10), längs der eine Vielzahl von Fördereinrichtungen (20) und eine Wartungseinrichtung (30) aneinandergereiht beweglich geführt sind, wobei
die Fördereinrichtungen (20) jeweils zum Abladen von einem darauf aufliegenden Objekt (70) quer zur Förderstrecke (10) ausgebildet sind,
die Wartungseinrichtung (30) eine Sensorik (31) zum Erfassen der Förderstrecke (10) zum Erhalten von Informationen zu einer Oberseite (12) der Förderstrecke (10) aufweist, **dadurch gekennzeichnet, dass**
die Sensorik (31) eine Kamera (32) auf der Oberseite (12) aufweist, die zum Erfassen einer Umhausung der Förderstrecke vorgesehen ist, und die als Informationen ein Bild- und/oder Videosignal bereitstellt, wobei die Umhausung als Randbegrenzung an den Seiten der Fördereinrichtung dient.

2. Fördervorrichtung (2) nach dem voranstehenden Anspruch,
wobei die Förderstrecke (10) eine Schiene für die Förder- und Wartungseinrichtungen (20, 30) aufweist,
und vorzugsweise wobei die Sensorik (31) zum Erhalten von Informationen zu einer Unterseite (14) der Förderstrecke (10) vorgesehen ist und eine Kamera (34) auf der Unterseite (14) aufweist.

3. Fördervorrichtung (2) nach einem der voranstehenden Ansprüche, wobei die Wartungseinrichtung (30) zur Erkennung von Rissen an der Förderstrecke (10) eingerichtet ist.

4. Fördervorrichtung (2) nach einem der voranstehenden Ansprüche, wobei die Sensorik (31) eine Beleuchtungseinrichtung (36) zum Ausleuchten der Förderstrecke (10) aufweist und, vorzugsweise, motorisch richtungsverstellbar ist.

5. Fördervorrichtung (2) nach einem der voranstehenden Ansprüche, umfassend eine Fernsteuerung (50) zum Fernbedienen der Förderstrecke (10) und/oder der Wartungseinrichtung (30), wobei die Fernsteuerung (50) zur Darstellung von den Informationen ausgebildet ist, und wobei die Fernsteuerung (50) zur kabellosen oder kabelgebundenen Kommunikation mit der Wartungseinrichtung (30) ausgebildet ist.

6. Fördervorrichtung (2) nach einem der voranstehenden Ansprüche, wobei die Wartungseinrichtung (30) ein Kollisionsschutzsystem aufweist, um eine Kollision der Wartungseinrichtung (30) mit Objekten (70) und/oder Fremdkörpern zu erkennen, wobei das Kollisionsschutzsystem eingerichtet ist, die Fördervorrichtung (2) anzuhalten.

7. Fördervorrichtung (2) nach einem der voranstehenden Ansprüche,
wobei die Wartungseinrichtung (30) zur Geräuschüberwachung und/oder Schwingungsüberwachung ausgebildet ist und ein akustisches und/oder schwingungstechnisches Diagnosesystem aufweist, und/oder
wobei die Wartungseinrichtung (30) zur Messung eines Luftspalts der Förderstrecke (10) ausgebildet ist.

8. Fördervorrichtung (2) nach einem der voranstehenden Ansprüche, umfassend eine Visualisierungseinrichtung (60), die zur Darstellung von den Informationen ausgebildet ist, beispielsweise mittels einer Anzeige und/oder mittels Augmented-Reality und/oder Virtual-Reality.

9. Fördervorrichtung (2) nach einem der voranstehenden Ansprüche, umfassend eine Ortungseinrichtung (38) zur Ermittlung einer Position der Wartungseinrichtung (30) längs der Förderstrecke (10), insbesondere wobei die Wartungseinrichtung (30) eine Markierung aufweist, um eine Position der Wartungseinrichtung (30) optisch zu markieren.

10. Fördervorrichtung (2) nach einem der voranstehenden Ansprüche, wobei die Wartungseinrichtung (30) eine Aktoreinrichtung (40) zum Durchführen von Wartungsarbeiten an der Förderstrecke (10) aufweist, wobei die Aktoreinrichtung (40) einen Roboterarm aufweist, insbesondere wobei der Roboterarm mit der Sensorik (31) und/oder einem Werkzeug bevorzugt zum Bewegen von einem Objekt (70) versehen ist.

11. Fördervorrichtung (2) nach einem der voranstehenden Ansprüche, wobei die Wartungseinrichtung (30) ein Reinigungssystem aufweist, das zum Lösen von Verschmutzungen an der Förderstrecke (10) und/oder zum Aufsaugen von Verschmutzungen eingerichtet ist und ein Sammelsystem für die Verschmutzungen aufweist.

12. Verfahren zum Betreiben der Vorrichtung (2) nach einem der voranstehenden Ansprüche, umfassend
Bewegen der Fördereinrichtung (20) und der Wartungseinrichtung (30) längs der Förderstrecke (10), und
Erfassen der Förderstrecke (10) mittels der Wartungseinrichtung (30) zum Erhalten von den Informationen, und vorzugsweise
wobei die Wartungseinrichtung (30) fernbedient wird und die Informationen dargestellt und/oder abgespeichert werden.

13. Verfahren nach dem voranstehenden Anspruch, umfassend
Vergleichen der erhaltenen Informationen mit vorbekannten Informationen über die Förderstrecke (10),
wobei das Vergleichen zum Prüfen der Funktion und/oder Ausrichtung einer fest an der Förderstrecke (10) verbauten Detektionseinrichtung (19) und/oder zum Lokalisieren einer geometrischen Abweichung in der Förderstrecke (10) vorgesehen ist.

14. Verfahren nach einem der voranstehenden Ansprüche, wobei die Wartungseinrichtung (30) Wartungsarbeiten durchführt,
wobei die Wartungsarbeiten eine Reparatur der Förderstrecke (10) und/oder ein Bewegen eines liegengebliebenen Objekts (70) und/oder ein Ausrichten und/oder Prüfen der Detektionseinrichtung (19) umfassen,
wobei Daten zu den durchgeführten Wartungsarbeiten in einer Datenbank abgespeichert werden, und
wobei sich wiederholende Wartungsarbeiten unter Berücksichtigung der abgespeicherten Daten automatisiert durchgeführt werden.

15. Verwendung einer insbesondere fernsteuerbaren Wartungseinrichtung (30) mit einer Sensorik (31) zum Erfassen einer Förderstrecke (10) einer zum Fördern von Objekten (70) ausgebildeten Fördervorrichtung (2) zum Erhalten von Informationen zu einer Oberseite (12) und vorzugsweise einer Unterseite (14) der Förderstrecke (10) in einem die Förderstrecke (10) und die Wartungseinrichtung (30) mit gleicher Geschwindigkeit bewegenden Betrieb der Fördervorrichtung (2), wobei die Fördervorrichtung (2) aneinandergereihte Fördereinrichtungen (20) aufweist, die jeweils zum Abladen von einem darauf aufliegenden Objekt (70) quer zur Förderstrecke (10) ausgebildet sind, **dadurch gekennzeichnet, dass** die Sensorik (31) eine Kamera (32) auf der Oberseite (12) aufweist, die zum Erfassen einer Umhausung der Förderstrecke vorgesehen ist, und die als Informationen ein Bild- und/oder Videosignal bereitstellt, wobei die Umhausung als Randbegrenzung an den Seiten der Fördereinrichtung dient.

## Claims

1. Conveyor device (2) for conveying objects (70), having a circulating conveyor line (10), along which a multiplicity of conveyor apparatuses (20) and a maintenance apparatus (30) are movably guided in a row, wherein
the conveyor apparatuses (20) are each designed to unload an object (70) resting thereon transversely with respect to the conveyor line (10),
the maintenance apparatus (30) has a sensor system (31) for detecting the conveyor line (10) to obtain information relating to an upper side (12) of the conveyor line (10), **characterized in that**
the sensor system (31) has a camera (32) on the upper side (12), the camera being provided to detect an enclosure of the conveyor line and providing an image and/or video signal as information, wherein the enclosure serves as a boundary limit on the sides of the conveyor apparatus.

2. Conveyor device (2) according to the preceding claim,
wherein the conveyor line (10) has a rail for the conveyor and maintenance apparatuses (20, 30),
and preferably wherein the sensor system (31) is provided to obtain information relating to an underside (14) of the conveyor line (10) and has a camera (34) on the underside (14).

3. Conveyor device (2) according to either of the preceding claims, wherein the maintenance apparatus (30) is configured to detect cracks on the conveyor line (10).

4. Conveyor device (2) according to one of the preceding claims, wherein the sensor system (31) has a lighting apparatus (36) for illuminating the conveyor line (10), and, preferably, is directionally adjustable by motor.

5. Conveyor device (2) according to one of the preceding claims, comprising a remote control (50) for the remote operation of the conveyor line (10) and/or the maintenance apparatus (30), wherein the remote control (50) is designed to display the information, and wherein the remote control (50) is designed for cable-free or cabled communication with the maintenance apparatus (30).

6. Conveyor device (2) according to one of the preceding claims, wherein the maintenance apparatus (30) has a collision protection system in order to detect a collision of the maintenance apparatus (30) with objects (70) and/or foreign bodies, wherein the collision protection system is configured to stop the conveyor device (2).

7. Conveyor device (2) according to one of the preceding claims,
wherein the maintenance apparatus (30) is designed to monitor noise and/or to monitor vibration and has an acoustic and/or vibration diagnostic system, and/or
wherein the maintenance apparatus (30) is designed to measure a clearance of the conveyor line (10).

8. Conveyor device (2) according to one of the preceding claims, comprising a visualization apparatus (60) which is designed to display the information, for example by means of an indicator and/or by means of augmented reality and/or virtual reality.

9. Conveyor device (2) according to one of the preceding claims, comprising a location apparatus (38) for determining a position of the maintenance apparatus (30) along the conveyor line (10), in particular wherein the maintenance apparatus (30) has a marking in order to optically mark a position of the maintenance apparatus (30).

10. Conveyor device (2) according to one of the preceding claims, wherein the maintenance apparatus (30) has an actuator apparatus (40) for carrying out maintenance work on the conveyor line (10), wherein the actuator apparatus (40) has a robot arm, in particular wherein the robot arm is provided with the sensor system (31) and/or a tool preferably for moving an object (70).

11. Conveyor device (2) according to one of the preceding claims, wherein the maintenance apparatus (30) has a cleaning system, which is configured to loosen contaminants on the conveyor line (10) and/or to suck up contaminants and has a collection system for the contaminants.

12. Method for operating the device (2) according to one of the preceding claims, comprising
moving the conveyor apparatus (20) and the maintenance apparatus (30) along the conveyor line (10), and
detecting the conveyor line (10) by means of the maintenance apparatus (30) in order to obtain the information, and preferably
wherein the maintenance apparatus (30) is remotely operated and the information is displayed and/or stored.

13. Method according to the preceding claim, comprising comparing the information obtained with previously known information about the conveyor line (10),
wherein the comparison is provided to check the function and/or alignment of a detection apparatus (19) permanently installed on the conveyor line (10) and/or to localize a geometric deviation in the conveyor line (10) .

14. Method according to one of the preceding claims, wherein the maintenance apparatus (30) carries out maintenance work,
wherein the maintenance work comprises repairing the conveyor line (10) and/or moving an object (70) that has been left behind and/or aligning and/or checking the detection apparatus (19),
wherein data relating to the maintenance work carried out are stored in a database, and
wherein repeated maintenance work is carried out automatically while taking the stored data into account.

15. Use of an in particular remotely controllable maintenance apparatus (30) having a sensor system (31) for detecting a conveyor line (10) of a conveyor device (2) designed to convey objects (70) in order to obtain information relating to an upper side (12) and preferably an underside (14) of the conveyor line (10) in an operation of the conveyor device (2) that moves the conveyor line (10) and the maintenance apparatus (30) at the same speed, wherein the conveyor device (2) has conveyor apparatuses (20) which are lined up in a row and are each designed to unload an object (70) resting thereon transversely with respect to the conveyor line (10), **characterized in that** the sensor system (31) has a camera (32) on the upper side (12), the camera being provided to detect an enclosure of the conveyor line and providing an image and/or video signal as information, wherein the enclosure serves as a boundary limit on the sides of the conveyor apparatus.

## Revendications

1. Dispositif de convoyage (2) destiné à convoyer des objets (70), comprenant une voie de convoyage (10) circulaire, le long de laquelle une pluralité d'appareils de convoyage (20) et un appareil de maintenance (30) sont guidés de manière mobile en étant disposés les uns à la suite des autres,
les appareils de convoyage (20) étant chacun conçus pour décharger un objet (70) reposant dessus transversalement à la voie de convoyage (10),
l'appareil de maintenance (30) comportant un système de capteur (31) destiné à détecter la voie de convoyage (10) afin d'obtenir des informations relatives à un côté supérieur (12) de la voie de convoyage (10), **caractérisé en ce que**
le système de capteur (31) comporte une caméra (32) sur le côté supérieur (12), qui est prévue pour détecter un carter de la voie de convoyage et qui fournit, en tant qu'informations, un signal d'image et/ou un signal vidéo, le carter servant de délimitation latérale sur les côtés de l'appareil de convoyage.

2. Dispositif de convoyage (2) selon la revendication précédente,
la voie de convoyage (10) comportant un rail destiné aux appareils de convoyage et de maintenance (20, 30),
et, de préférence, le système de capteur (31) étant prévu pour obtenir des informations relatives à un côté inférieur (14) de la voie de convoyage (10) et comportant une caméra (34) sur le côté inférieur (14).

3. Dispositif de convoyage (2) selon l'une des revendications précédentes, l'appareil de maintenance (30) étant configuré pour détecter des fissures sur la voie de convoyage (10).

4. Dispositif de convoyage (2) selon l'une des revendications précédentes, le système de capteur (31) comportant un appareil d'éclairage (36) destiné à éclairer la voie de convoyage (10) et étant, de préférence, réglable en direction de manière motorisée.

5. Dispositif de convoyage (2) selon l'une des revendications précédentes, comprenant une télécommande (50) destinée à commander à distance la voie de convoyage (10) et/ou l'appareil de maintenance (30), la télécommande (50) étant conçue pour afficher les informations, et la télécommande (50) étant conçue pour une communication sans fil ou filaire avec l'appareil de maintenance (30).

6. Dispositif de convoyage (2) selon l'une des revendications précédentes, l'appareil de maintenance (30) comportant un système de protection contre les collisions destiné à détecter une collision de l'appareil de maintenance (30) avec des objets (70) et/ou des corps étrangers, le système de protection contre les collisions étant configuré pour arrêter le dispositif de convoyage (2).

7. Dispositif de convoyage (2) selon l'une des revendications précédentes,
l'appareil de maintenance (30) étant configuré pour surveiller le bruit et/ou pour surveiller les vibrations et comportant un système de diagnostic acoustique et/ou vibratoire, et/ou
l'appareil de maintenance (30) étant configuré pour mesurer un espace d'air de la voie de convoyage (10).

8. Dispositif de convoyage (2) selon l'une des revendications précédentes, comprenant un appareil de visualisation (60), qui est conçu pour afficher les informations, par exemple au moyen d'un affichage et/ou au moyen de la réalité augmentée et/ou de la réalité virtuelle.

9. Dispositif de convoyage (2) selon l'une des revendications précédentes, comprenant un appareil de localisation (38) destiné à déterminer une position de l'appareil de maintenance (30) le long de la voie de convoyage (10), notamment l'appareil de maintenance (30) comportant un marquage afin de marquer optiquement une position de l'appareil de maintenance (30).

10. Dispositif de convoyage (2) selon l'une des revendications précédentes, l'appareil de maintenance (30) comportant un appareil d'actionnement (40) destiné à effectuer des travaux de maintenance sur la voie de convoyage (10), l'appareil d'actionnement (40) comportant un bras robotisé, notamment le bras robotisé étant pourvu du système de capteur (31) et/ou d'un outil, de préférence destiné à déplacer un objet (70).

11. Dispositif de convoyage (2) selon l'une des revendications précédentes, l'appareil de maintenance (30) comportant un système de nettoyage configuré pour détacher des salissures de la voie de convoyage (10) et/ou pour aspirer des salissures, et comportant un système de collecte des salissures.

12. Procédé d'exploitation du dispositif (2) selon l'une des revendications précédentes, comprenant le déplacement de l'appareil de convoyage (20) et de l'appareil de maintenance (30) le long de la voie de convoyage (10), et
la détection de la voie de convoyage (10) au moyen de l'appareil de maintenance (30) afin d'obtenir les informations, et, de préférence,
l'appareil de maintenance (30) étant commandé à distance et les informations étant affichées et/ou enregistrées.

13. Procédé selon la revendication précédente, comprenant
la comparaison des informations obtenues avec des informations connues au préalable concernant la voie de convoyage (10),
la comparaison étant prévue pour contrôler le fonctionnement et/ou l'orientation d'un appareil de détection (19) installé de manière fixe sur la voie de convoyage (10) et/ou pour localiser un écart géométrique dans la voie de convoyage (10).

14. Procédé selon l'une des revendications précédentes, l'appareil de maintenance (30) effectuant des travaux de maintenance,
les travaux de maintenance comprenant une réparation de la voie de convoyage (10) et/ou un déplacement d'un objet (70) resté immobilisé et/ou un alignement et/ou un contrôle de l'appareil de détection (19),
des données relatives aux travaux de maintenance effectués étant enregistrées dans une base de données, et
des travaux de maintenance récurrents étant effectués de manière automatisée en tenant compte des données enregistrées.

15. Utilisation d'un appareil de maintenance (30), notamment commandable à distance, comportant un système de capteur (31), pour détecter une voie de convoyage (10) d'un dispositif de convoyage (2) conçu pour convoyer des objets (70), afin d'obtenir des informations relatives à un côté supérieur (12) et, de préférence, à un côté inférieur (14) de la voie de convoyage (10), dans une exploitation du dispositif de convoyage (2) au cours de laquelle la voie de convoyage (10) et l'appareil de maintenance (30) se déplacent à la même vitesse, le dispositif de convoyage (2) comportant des appareils de convoyage (20) disposés les uns à la suite des autres, qui sont chacun conçus pour décharger un objet (70) reposant dessus transversalement à la voie de convoyage (10), **caractérisée en ce que** le système de capteur (31) comporte une caméra (32) sur le côté supérieur (12), qui est prévue pour détecter un carter de la voie de convoyage et qui fournit, en tant qu'informations, un signal d'image et/ou un signal vidéo, le carter servant de délimitation latérale sur les côtés de l'appareil de convoyage.
